# EUROPEAN PATENT SPECIFICATION

(11) **EP 3 115 397 B1**
(45) Date of publication and mention of the grant of the patent: **19.12.2018**
(21) Application number: 15755903.0
(22) Date of filing: 27.02.2015
(51) Int. Cl.: C08G 77/04, C08L 83/04, C09D 183/04

(54) **SILSESQUIOXANE COMPLEX POLYMER AND METHOD FOR PREPARING SAME**
SILSESQUIOXANKOMPLEXPOLYMER UND VERFAHREN ZUR HERSTELLUNG DAVON
POLYMÈRE COMPLEXE DE SILSESQUIOXANE ET PROCÉDÉ DE PRÉPARATION ASSOCIÉ

(30) Priority: 28.02.2014 KR 20140024548; 26.02.2015 KR 20150027582
(43) Date of publication of application: 11.01.2017
(73) Proprietor: Dongjin Semichem Co., Ltd, Incheon 404-205 (KR)
(72) Inventor: CHOI, Seung Sock, Hwaseong-City Gyeonggi-do 445-935 (KR); YOO, Jae Won, Hwaseong-City Gyeonggi-do 445-935 (KR); NAM, Dong Jin, Hwaseong-City Gyeonggi-do 445-935 (KR); KIM, Doo Shik, Hwaseong-City Gyeonggi-do 445-935 (KR); PARK, Kyung Min, Hwaseong-City Gyeonggi-do 445-935 (KR); HWANG, Jong Won, Hwaseong-City Gyeonggi-do 445-935 (KR); OH, Seong Yeon, Hwaseong-City Gyeonggi-do 445-935 (KR); CHOI, Ji Sik, Hwaseong-City Gyeonggi-do 445-935 (KR)
(74) Representative: Bockhorni & Brüntjen Partnerschaft Patentanwälte mbB
(86) International application number: PCT/KR2015/001970
(87) International publication number: WO 2015/130145

(56) References cited:
- EP-A1- 2 174 974
- JP-A- H10 251 407
- JP-A- 2013 521 243
- KR-A- 20090 029 563
- KR-A- 20110 112 641
- US-A1- 2004 068 075

## Description

### FIELD OF THE INVENTION

The present invention relates to a silsesquioxane complex polymer and a method for preparing same, and more specifically, to a silsesquioxane complex polymer of which processability and physical properties are maximized by including, in a single polymer, a silsesquioxane ladder chain, a complex chain, and a cage-type silsesquioxane, which have a specific structure.

### BACKGROUND OF THE INVENTION

Silsesquioxane has been used for several purposes in various fields. In particular, several attempts have been made to improve processability and maximize mechanical and physical properties, and researches and development are continuing up to now. However, the silsesquioxane polymers developed so far are still insufficient to satisfy processability and mechanical, physical properties at the same time.

For example, a cage-type silsesquioxane has been applied in various fields by displaying physical properties capable of forming a siloxane bond, but it has a limitation in solubility during solution process since it exists as a crystal structure, and the outcome itself applied from the cage type undergoes realignment at its molecular level such as recrystallization, causing the problem of not insuring performance reproduction. As another typical structure, a ladder silsesquioxane is a linear structure and has excellent solution processability, so it is a structure capable of compensating the shortcomings of the cage type structure, but it has its own shortcomings because its physical properties are inferior to the crystal cage type structure. Furthermore, a random type silsesquioxane undergoes freestyle polymerization, and thus it has a limitation that it has to be applied by gelation by using Si-OH, Si-alkoxy, etc. that are present unstably in the polymer, and it is difficult to guarantee its reproduction.

In the meantime, attempts have been made to control the silsesquioxane to a particular structure in accordance with the requirements of the industry. US Patent Application No. US2011-0201827 attempted to control a polyhedral silsesquioxane by using a silane coupling agent as a precursor and to obtain its unique advantage, but it is an example of using as an only substituent by connecting the cage type to the single linear type and it did not significantly improve its actual physical properties.

Document EP 2 174 974 discloses the preparation of a silsesquioxane polymer which comprises a cage structure but also unit in which the cage structure has been cleaved to provide diol functionalities.

Therefore, the inventors have designed a polymer structure of silsesquioxane having a particular structure as a result of studying to compensate the shortcomings of the silsesquioxane and maximize the advantages thereof, and introduced an easy curing process by using organic functional groups of the thus obtained polymer. As a result, they have found that excellent physical properties could be continued for a long time, and it could be utilized in various industrial fields as a main material, additive material, coating material, etc., and thus completed the invention.

### SUMMARY OF THE INVENTION

In order to solve the problems as described in the above, it is an object of the present invention to provide a silsesquioxane complex polymer of which processability and physical properties are maximized by including, in a single polymer, a silsesquioxane ladder chain, a complex chain, and a cage-type silsesquioxane, which have a specific structure.

Further, it is an object of the invention to provide a method for preparing the silsesquioxane complex polymer.

Still further, it is an object of the invention to provide a silsesquioxane coating composition comprising the silsesquioxane complex polymer.

To achieve the above objects, the present invention provides a silsesquioxane complex polymer represented by any one of the following chemical formulae 1 to 3: 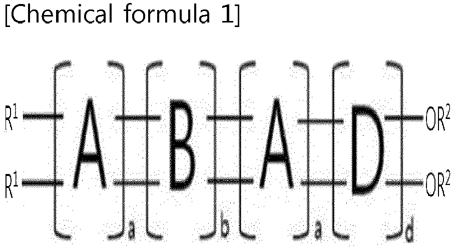 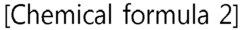 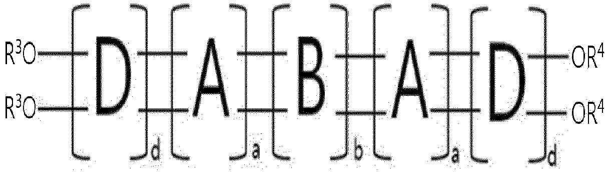 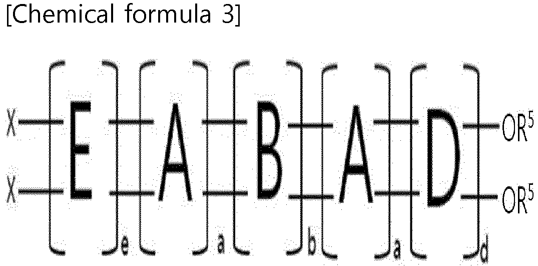 wherein, A is 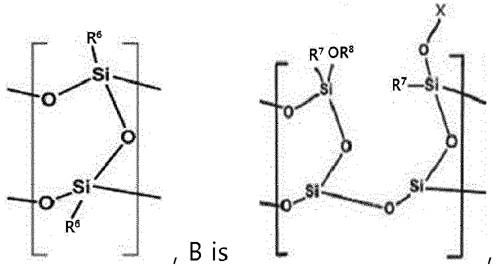 D is 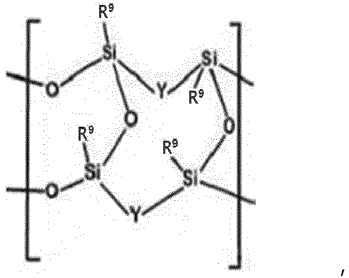 E is 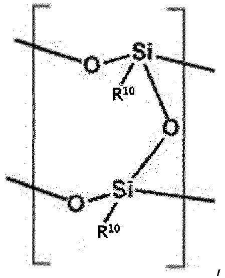
Y is each independently O, NR¹¹ or [(SiO_{3/2}R)₄₊₂ₙO], with the proviso that at least one is [(SiO_{3/2}R)₄₊₂ₙO],
X is each independently R¹² or [(SiO_{3/2}R)₄₊₂ₙR], with the proviso that at least one is [(SiO_{3/2}R)₄₊₂ₙR],
R, R¹, R², R³, R⁴, R⁵, R⁶, R⁷, R⁸, R⁹, R¹⁰, R¹¹, and R¹² are each independently hydrogen; deuterium; halogen; amine group; epoxy group; cyclohexylepoxy group; (meth)acryl group; thiol group; isocyanate group; nitrile group; nitro group; phenyl group; or alkyl group of C₁∼C₄₀; alkenyl group of C_{2~}C₄₀; alkoxy group of C₁∼C₄₀; cycloalkyl group of C₃∼C₄₀; heterocycloalkyl group of C₃∼C₄₀; aryl group of C₆∼C₄₀; heteroaryl group of C₃∼C₄₀; aralkyl group of C₃∼C₄₀; aryloxy group of C₃∼C₄₀; or arylthiol group of C₃∼C₄₀ substituted or unsubstituted by deuterium, halogen, amine group, epoxy group, (meth)acryl group, thiol group, isocyanate group, nitrile group, nitro group, or phenyl group, preferably, alkyl group of C₁∼C₄₀ or alkenyl group of C₂∼C₄₀ substituted or unsubstituted by deuterium, halogen, amine group, (meth)acryl group, thiol group, isocyanate group, nitrile group, nitro group, phenyl group or cyclohexyl epoxy group, amine group, epoxy group, cyclohexyl epoxy group, (meth)acryl group, thiol group, phenyl group, or isocyanate group,
a and d are each independently an integer of 1 to 100,000, preferably a is 3 to 1000 and d is 1 to 500, and more preferably a is 5 to 300 and d is 2 to 100,
b is an integer of 1 to 500,
e is 1 to 2, preferably 1, and
n is an integer of 1 to 20, preferably 3 to 10.

In another aspect, the invention provides a method for preparing silsesquioxane complex polymer represented by the above chemical formula 1, comprising a step 1 of mixing a basic catalyst and an organic solvent in a reactor and then adding an organic silane compound to prepare the following chemical formula 4 of two types of which the condensation rate is controlled; a step 2 of adding an acidic catalyst to the reactor to adjust the reaction solution to acidic state in order to incorporate [B]b structure and [D]d(OR²)₂ structure into the chemical formula 4 obtained from the above step 1 and then adding an organic silane compound and stirring them; a step 3 of adding a basic catalyst to the reactor after each reaction of the above step 2 to convert the reaction solution into its basic state and performing condensation reaction; and a step 4 of condensing two or more substances obtained through the above step 3 under basic condition to connect them: 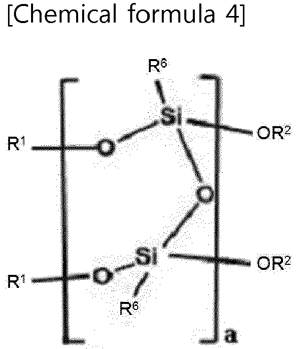 wherein, R¹, R², R⁶, B, D, a, b, and d are as defined in the chemical formulae 1 to 3.

In another aspect, the invention provides a method for preparing silsesquioxane complex polymer represented by the above chemical formula 2, comprising a step 1 of mixing a basic catalyst and an organic solvent in a reactor and then adding an organic silane compound to prepare the following chemical formula 4 of two types of which the condensation rate is controlled; a step 2 of adding an acidic catalyst to the reactor to adjust the reaction solution to acidic state in order to incorporate [B]b structure and [D]d(OR⁴)₂ structure into the chemical formula 4 obtained from the above step 1 and then adding an organic silane compound and stirring them; a step 3 of adding a basic catalyst to the reactor after each reaction of the above step 2 to convert the reaction solution into its basic state and performing condensation reaction; a step 4 of condensing two or more substances obtained through the above step 3 under basic condition to connect them; a step 5 of adding an acidic catalyst to the reactor to adjust the reaction solution to acidic state in order to incorporate [D]d(OR³)₂ structure after the above step 4 and then adding an organic silane compound and stirring them; and a step 6 of adding a basic catalyst to the reactor after the reaction of the above step 5 to convert the reaction solution into its basic state and performing condensation reaction.

In another aspect, the invention provides a method for preparing silsesquioxane complex polymer represented by the above chemical formula 3, comprising a step 1 of mixing a basic catalyst and an organic solvent in a reactor and then adding an organic silane compound to prepare the following chemical formula 4 of two types of which the condensation rate is controlled; a step 2 of adding an acidic catalyst to the reactor to adjust the reaction solution to acidic state in order to incorporate [B]b structure into the chemical formula 4 obtained from the above step 1 and then adding an organic silane compound and stirring them; a step 3 of adding a basic catalyst to the reactor after each reaction of the above step 2 to convert the reaction solution into its basic state and performing condensation reaction; a step 4 of condensing two or more substances obtained through the above step 3 under basic condition to connect them; a step 5 of adding an acidic catalyst to the reactor to adjust the reaction solution to acidic state in order to incorporate [D]d(OR⁵)₂ structure after the above step 4 and then adding an organic silane compound and stirring them; a step 6 of adding a basic catalyst to the reactor after the reaction of the above step 5 to convert the reaction solution into its basic state and performing condensation reaction; and a step of 7 of adding an acidic catalyst to the reactor to convert the reaction solution into acidic atmosphere in order to incorporate [E]eX₂ structure at the end of the complex polymer after the above step 6 and then mixing an organic silane compound and stirring them.

In another aspect, the invention provides a silsesquioxane coating composition comprising the above silsesquioxane complex polymer.

The silsesquioxane complex polymer in accordance with the present invention has easy processability of the silsesquioxane ladder type and complex chain and excellent physical properties of the cage type silsesquioxane at the same time, so that when prepared into a coating solution, it can give excellent physical properties, optical properties, heat resistance properties, etc. to various materials through a simple curing process.

### DETAILED DESCRIPTION OF THE INVENTION

Hereinafter, the invention will be described in detail.

The present invention provides a silsesquioxane complex polymer represented by any one of the following chemical formulae 1 to 3: 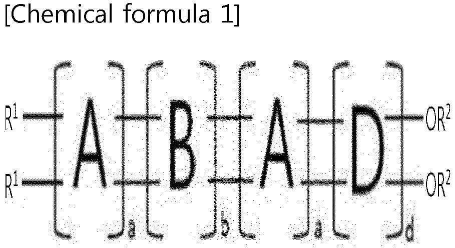 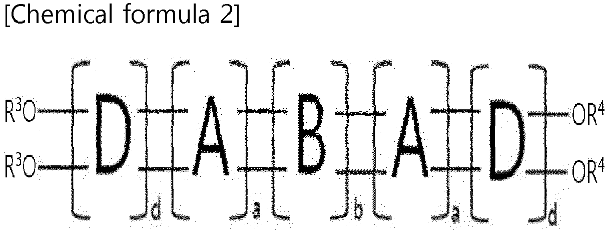 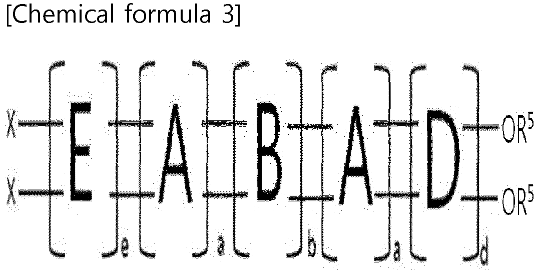 wherein, A is 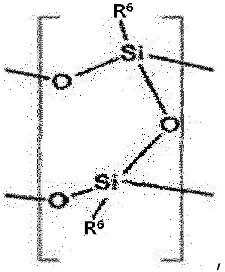 B is 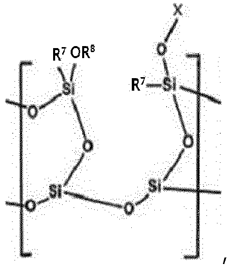 D is 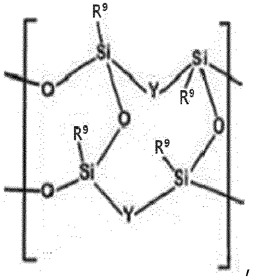 E is 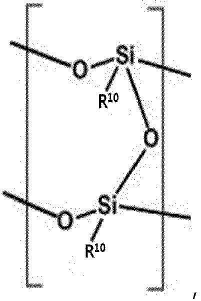
Y is each independently O, NR¹¹ or [(SiO_{3/2}R)₄₊₂ₙO], with the proviso that at least one is [(SiO_{3/2}R)₄₊₂ₙO],
X is each independently R¹² or [(SiO_{3/2}R)₄₊₂ₙRj, with the proviso that at least one is [(SiO_{3/2}R)₄₊₂ₙR],
R, R¹, R², R³, R⁴, R⁵, R⁶, R⁷, R⁸, R⁹, R¹⁰, R¹¹, and R¹² are each independently hydrogen; deuterium; halogen; amine group; epoxy group; cyclohexylepoxy group; (meth)acryl group; thiol group; isocyanate group; nitrile group; nitro group; phenyl group; or alkyl group of C₁∼C₄₀; alkenyl group of C_{2~}C₄₀; alkoxy group of C₁∼C₄₀; cycloalkyl group of C₃∼C₄₀; heterocycloalkyl group of C₃∼C₄₀; aryl group of C₆∼C₄₀; heteroaryl group of C₃∼C₄₀; aralkyl group of C₃∼C₄₀; aryloxy group of C₃∼C₄₀; or arylthiol group of C₃∼C₄₀ substituted or unsubstituted by deuterium, halogen, amine group, epoxy group, (meth)acryl group, thiol group, isocyanate group, nitrile group, nitro group, or phenyl group, preferably, alkyl group of C₁∼C₄₀ or alkenyl group of C₂∼C₄₀ substituted or unsubstituted by deuterium, halogen, amine group, (meth)acryl group, thiol group, isocyanate group, nitrile group, nitro group, phenyl group or cyclohexyl epoxy group, amine group, epoxy group, cyclohexyl epoxy group, (meth)acryl group, thiol group, phenyl group, or isocyanate group,
a and d are each independently an integer of 1 to 100,000, preferably a is 3 to 1000 and d is 1 to 500, and more preferably a is 5 to 300 and d is 2 to 100, b is an integer of 1 to 500,
e is 1 to 2, preferably 1, and
n is an integer of 1 to 20, preferably 3 to 10.

The silsesquioxane complex polymer represented by any one of the above chemical formulae 1 to 3 has an organic functional group represented by R, R¹, R², R³, R⁴, R⁵, R⁶, R⁷, R⁸, R⁹, R¹⁰, R¹¹, or R¹², its repeat unit consists of a, b and d, and it is a complex silsesquioxane polymer capable of selectively incorporating e as an end unit.

n of the structure [(SiO_{3/2}R)₄₊₂ₙO] incorporated into the repeat unit d of the above chemical formula 1 or 2 may be substituted by an integer of 1 to 20, preferably it may be 3 to 10, and more preferably the average n value is 4 to 5, for example when n is 4, the substituted structure may be represented by the following formula 5: 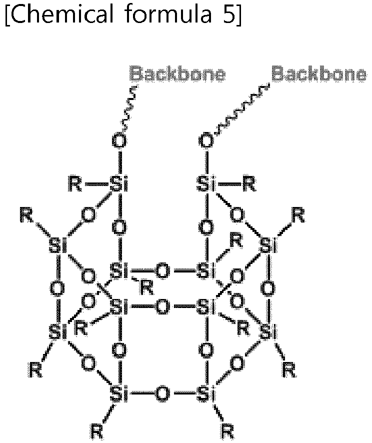 wherein, R is as defined as above.

In the present invention, n of the structure [(SiO_{3/2}R)₄₊₂ₙR] incorporated into the repeat unit b or e of the above chemical formula 3 may be substituted by 1 to 20, preferably it may be 3 to 10, and more preferably the average n value is 4 to 5, for example when n is 4, the substituted structure may be represented by the following formula 6: 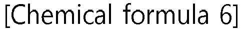 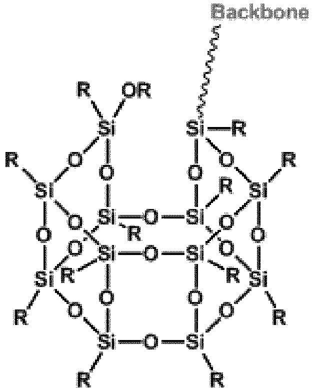 wherein, R is as defined as above.

As specific examples, the silsesquioxane complex polymer of the chemical formula 1 may be polymers listed in Tables 1 and 2 below. In the following Tables 1 to 3, ECHE refers to (epoxycyclohexyl)ethyl, GlyP refers to glycidoxypropyl, and POMMA refers to (methacryloyloxy)propyl, and when two or more are listed, it refers to the use of mixture.

**Table 1**

| No | R1 | R2 | R6 | R7 | R8 | R9 | R of X | R of Y |
|---|---|---|---|---|---|---|---|---|
| 1-1 | OH, methoxy | H, methyl | ECHE | ECHE | H, methyl | ECHE | ECHE | ECHE |
| 1-2 | OH, methoxy | H, methyl | Phenyl | Phenyl | H, methyl | Phenyl | Phenyl | Phenyl |
| 1-3 | OH, methoxy | H, methyl | Methyl | Methyl | H, methyl | Methyl | Methyl | Methyl |
| 1-4 | OH, methoxy | H, methyl | GlyP | GlyP | H, methyl | GlyP | GlyP | GlyP |
| 1-5 | OH, methoxy | H, methyl | POMMA | POMMA | H, methyl | POMMA | POMMA | POMMA |
| 1-6 | OH, methoxy | H, methyl | ECHE | ECHE | H, methyl | Phenyl | ECHE | Phenyl |
| 1-7 | OH, methoxy | H, methyl | ECHE | ECHE | H, methyl | Methyl | ECHE | Methyl |
| 1-8 | OH, methoxy | H, methyl | ECHE | ECHE | H, methyl | GlyP | ECHE | GlyP |
| 1-9 | OH, methoxy | H, methyl | ECHE | ECHE | H, methyl | POMMA | ECHE | POMMA |
| 1-10 | OH, methoxy | H, methyl | Phenyl | Phenyl | H, methyl | ECHE | Phenyl | ECHE |
| 1-11 | OH, methoxy | H, methyl | Phenyl | Phenyl | H, methyl | Methyl | Phenyl | Methyl |
| 1-12 | OH, methoxy | H, methyl | Phenyl | Phenyl | H, methyl | GlyP | Phenyl | GlyP |
| 1-13 | OH, methoxy | H, methyl | Phenyl | Phenyl | H, methyl | POMMA | Phenyl | POMMA |
| 1-14 | OH, methoxy | H, methyl | Methyl | Methyl | H, methyl | ECHE | Methyl | ECHE |
| 1-15 | OH, methoxy | H, methyl | Methyl | Methyl | H, methyl | Phenyl | Methyl | Phenyl |
| 1-16 | OH, methoxy | H, methyl | Methyl | Methyl | H, methyl | GlyP | Methyl | GlyP |
| 1-17 | OH, methoxy | H, methyl | Methyl | Methyl | H, methyl | POMMA | Methyl | POMMA |
| 1-18 | OH, methoxy | H, methyl | GlyP | GlyP | H, methyl | ECHE | GlyP | ECHE |
| 1-19 | OH, methoxy | H, methyl | GlyP | GlyP | H, methyl | Phenyl | GlyP | Phenyl |
| 1-20 | OH, methoxy | H, methyl | GlyP | GlyP | H, methyl | Methyl | GlyP | Methyl |
| 1-21 | OH, methoxy | H, methyl | GlyP | GlyP | H, methyl | POMMA | GlyP | POMMA |
| 1-22 | OH, methoxy | H, methyl | POMMA | POMMA | H, methyl | ECHE | POMMA | ECHE |
| 1-23 | OH, methoxy | H, methyl | POMMA | POMMA | H, methyl | Phenyl | POMMA | Phenyl |
| 1-24 | OH, methoxy | H, methyl | POMMA | POMMA | H, methyl | Methyl | POMMA | Methyl |
| 1-25 | OH, methoxy | H, methyl | POMMA | POMMA | H, methyl | GlyP | POMMA | GlyP |

**Table 2**

| No | R1 | R2 | R6 | R7 | R8 | R9 | R of X | R of Y |
|---|---|---|---|---|---|---|---|---|
| 2-1 | OH, methoxy | H, methyl | ECHE | Alkylthiol | H, methyl | ECHE | Alkylthiol | ECHE |
| 2-2 | OH, CF₃ | H, ethyl | ECHE | Phenyl | H, ethyl | Phenyl | phenyl | Phenyl |
| 2-3 | OH, methoxy | H, acetyl | ECHE | Methyl | H, acetyl | Methyl | Methyl | methyl |
| 2-4 | CF₃, methoxy | Vinyl, methyl | Phenyl | GlyP | Vinyl, methyl | GlyP | GlyP | GlyP |
| 2-5 | OH, methoxy | H, methyl | Phenyl | POMMA | H, methyl | POMMA | POMMA | POMMA |
| 2-6 | OH, C₈F₁₃ | H, F | Phenyl | ECHE | H, F | Phenyl | ECHE | Phenyl |
| 2-7 | OH, CF₃ | CF₃, methyl | ECHE | ECHE | CF₃, methyl | Methyl | ECHE | Methyl |
| 2-8 | OH, C₈F₁₃ | H, methyl | Hexyl | ECHE | H, methyl | GlyP | ECHE | GlyP |
| 2-9 | OH, methoxy | H, CF₃ | GlyP | ECHE | H, CF₃ | POMMA | ECHE | POMMA |
| 2-10 | OH, methoxy | H, methyl | POMM A | Phenyl | H, methyl | ECHE | Phenyl | ECHE |
| 2-11 | OH, C₈F₁₃ | Aryl, methyl | Amino propyl | Phenyl | Aryl, methyl | Hexyl | Phenyl | Hexyl |
| 2-12 | OH, alkylthiol | H, methacr yl | Phenyl | Phenyl | H, methacryl | GlyP | Phenyl | GlyP |
| 2-13 | OH, methoxy | H, methyl | GlyP | ECHE | H, methyl | POMMA | ECHE | POMMA |
| 2-14 | OH, acryl | H, octyl | POMM A | Hexyl | H, octyl | Aminop ropyl | Hexyl | Aminopro pyl |
| 2-15 | Vinyl, methoxy | H, methyl | Amino propyl | GlyP | H, methyl | Phenyl | GlyP | Phenyl |
| 2-16 | Alkylamine | H, methyl | Phenyl | POMMA | H, methyl | Octyl | POMMA | GlyP |
| 2-17 | OH, ethyl, methyl | Alkylthiol, methyl | Octyl | Aminopropyl | Alkylthiol, methyl | POMMA | Aminopropyl | POMMA |
| 2-18 | Acetoxy, methoxy | H, methyl | POMMA | Phenyl | H, methyl | Aminopropyl | Phenyl | Aminopropyl |
| 2-19 | Propoxy, methoxy | H, CF₃ | ECHE | GlyP | H, CF₃ | Phenyl | GlyP | Phenyl |
| 2-20 | OH, methoxy | H, methyl | Phenyl | POMMA | H, methyl | Octyl | POMMA | Octyl |
| 2-21 | C₈F₁₃, methoxy | C₈F₁₃, methyl | Methyl | Aminopropyl | C₈F₁₃, methyl | POMMA | Aminopropyl | POMMA |
| 2-22 | OH, aryl | H, propyl | GlyP | Phenyl | H, propyl | ECHE | Phenyl | ECHE |
| 2-23 | OH, methoxy | F, methyl | POMMA | Octyl | F, methyl | Phenyl | Octyl | Phenyl |
| 2-24 | CF₃, methacryl | H, methyl | POMMA | POMMA | H, methyl | Methyl | POMMA | Methyl |
| 2-25 | OH, methoxy | H, methyl | POMMA | POMMA | H, methyl | GlyP | POMMA | GlyP |

As specific examples, the silsesquioxane complex polymer of the chemical formula 2 may be polymers listed in Tables 3 and 4 below.

**Table 3**

| No | R3 | R4 | R6 | R7 | R8 | R9 | R of X | R of Y |
|---|---|---|---|---|---|---|---|---|
| 3-1 | H, methyl | H, methyl | ECHE | ECHE | H, methyl | ECHE | ECHE | ECHE |
| 3-2 | H, methyl | H, methyl | Phenyl | Phenyl | H, methyl | Phenyl | Phenyl | Phenyl |
| 3-3 | H, methyl | H, methyl | Methyl | Methyl | H, methyl | Methyl | Methyl | Methyl |
| 3-4 | H, methyl | H, methyl | GlyP | GlyP | H, methyl | GlyP | GlyP | GlyP |
| 3-5 | H, methyl | H, methyl | POMMA | POMMA | H, methyl | POMMA | POMMA | POMMA |
| 3-6 | H, methyl | H, methyl | ECHE | ECHE | H, methyl | Phenyl | ECHE | Phenyl |
| 3-7 | H, methyl | H, methyl | ECHE | ECHE | H, methyl | Methyl | ECHE | Methyl |
| 3-8 | H, methyl | H, methyl | ECHE | ECHE | H, methyl | GlyP | ECHE | GlyP |
| 3-9 | H, methyl | H, methyl | ECHE | ECHE | H, methyl | POMMA | ECHE | POMMA |
| 3-10 | H, methyl | H, methyl | Phenyl | Phenyl | H, methyl | ECHE | Phenyl | ECHE |
| 3-11 | H, methyl | H, methyl | Phenyl | Phenyl | H, methyl | Methyl | Phenyl | Methyl |
| 3-12 | H, methyl | H, methyl | Phenyl | Phenyl | H, methyl | GlyP | Phenyl | GlyP |
| 3-13 | H, methyl | H, methyl | Phenyl | Phenyl | H, methyl | POMMA | Phenyl | POMMA |
| 3-14 | H, methyl | H, methyl | Methyl | Methyl | H, methyl | ECHE | Methyl | ECHE |
| 3-15 | H, methyl | H, methyl | Methyl | Methyl | H, methyl | Methyl | Methyl | Phenyl |
| 3-16 | H, methyl | H, methyl | Methyl | Methyl | H, methyl | GlyP | Methyl | GlyP |
| 3-17 | H, methyl | H, methyl | Methyl | Methyl | H, methyl | POMMA | Methyl | POMMA |
| 3-18 | H, methyl | H, methyl | GlyP | GlyP | H, methyl | ECHE | GlyP | ECHE |
| 3-19 | H, methyl | H, methyl | GlyP | GlyP | H, methyl | Phenyl | GlyP | Phenyl |
| 3-20 | H, methyl | H, methyl | GlyP | GlyP | H, methyl | Methyl | GlyP | Methyl |
| 3-21 | H, methyl | H, methyl | GlyP | GlyP | H, methyl | POMMA | GlyP | POMMA |
| 3-22 | H, methyl | H, methyl | POMMA | POMMA | H, methyl | ECHE | POMMA | ECHE |
| 3-23 | H, methyl | H, methyl | POMMA | POMMA | H, methyl | Phenyl | POMMA | Phenyl |
| 3-24 | H, methyl | H, methyl | POMMA | POMMA | H, methyl | Methyl | POMMA | Methyl |
| 3-25 | H, methyl | H, methyl | POMMA | POMMA | H, methyl | GlyP | POMMA | GlyP |

**Table 4**

| N o | R3 | R4 | R6 | R7 | R8 | R9 | R of X | R of Y |
|---|---|---|---|---|---|---|---|---|
| 4-1 | H, methyl | CF₃, methyl | ECHE | Alkylthiol | H, methyl | ECHE | Alkylthiol | ECHE |
| 4-2 | H, ethyl | H, methyl | ECHE | Phenyl | Alkylthi ol, methyl | Hexyl | Phenyl | Hexyl |
| 4-3 | H, acetyl | H, CF₃ | ECHE | Methyl | H, methyl | GlyP | Methyl | GlyP |
| 4-4 | Vinyl, methyl | H, methyl | Phenyl | GlyP | H, CF₃ | POMMA | GlyP | POMMA |
| 4-5 | H, methyl | H, methyl | Phenyl | POMMA | H, ethyl | Aminopro pyl | POMMA | Aminopro pyl |
| 4-6 | H, F | H, octyl | Phenyl | ECHE | H, F | Phenyl | ECHE | Phenyl |
| 4-7 | CF₃, methyl | H, methyl | ECHE | ECHE | Vinyl, methyl | GlyP | ECHE | GlyP |
| 4-8 | H, methyl | H, methyl | Hexyl | ECHE | H, methyl | POMMA | ECHE | POMMA |
| 4-9 | H, CF₃ | Alkylthi ol, methyl | GlyP | ECHE | H, F | Aminopro pyl | ECHE | Aminopro pyl |
| 4-10 | H, methyl | H, methyl | POMMA | Phenyl | CF₃, methyl | Phenyl | Phenyl | Phenyl |
| 4-11 | Aryl, methyl | H, methyl | Aminopro pyl | Phenyl | H, methyl | Octyl | Phenyl | Octyl |
| 4-12 | H, methac ryl | H, methyl | Phenyl | Phenyl | H, CF₃ | POMMA | Phenyl | POMMA |
| 4-13 | H, methyl | Alkylthi ol, methyl | GlyP | ECHE | H, methyl | ECHE | ECHE | ECHE |
| 4-14 | H, octyl | H, methyl | POMMA | Hexyl | H, methyl | Phenyl | Hexyl | Phenyl |
| 4-15 | H, methyl | H, F | Aminopro pyl | GlyP | H, octyl | Methyl | GlyP | Methyl |
| 4-16 | H, methyl | CF₃, methyl | Phenyl | POMMA | H, methyl | GlyP | POMMA | GlyP |
| 4-17 | Alkylthi ol, methyl | H, methyl | Octyl | Aminopro pyl | H, methyl | POMMA | Aminopro pyl | POMMA |
| 4-18 | H, methyl | H, CF₃ | POMMA | Phenyl | Alkylthi ol, methyl | Aminopro pyl | Phenyl | Aminopro pyl |
| 4-19 | H, CF₃ | H, methyl | ECHE | GlyP | H, methyl | Phenyl | GlyP | Phenyl |
| 4-20 | H, methyl | H, methyl | Phenyl | POMMA | H, methyl | Octyl | POMMA | Octyl |
| 4-21 | C₈ F₁₃, methyl | H, methyl | Methyl | Aminopro pyl | H, methyl | POMMA | Aminopro pyl | POMMA |
| 4-22 | H, propyl | Alkylthi ol, methyl | GlyP | Phenyl | Alkylthi ol, methyl | ECHE | Phenyl | ECHE |
| 4-23 | F, methyl | H, methyl | POMMA | Octyl | H, methyl | Phenyl | Octyl | Phenyl |
| 4-24 | H, methyl | H, CF₃ | POMMA | POMMA | H, CF₃ | Methyl | POMMA | Methyl |
| 4-25 | H, ethyl | H, methyl | POMMA | ECHE | H, methyl | GlyP | ECHE | GlyP |

As specific examples, the silsesquioxane complex polymer of the chemical formula 3 may be polymers listed in Tables 5 and 6 below.

**Table 5**

| No | R6 | R7 | R8 | R9 | R10 | R of X | R of Y | Terminal R of E |
|---|---|---|---|---|---|---|---|---|
| 5-1 | ECHE | ECHE | H, methyl | ECHE | ECHE | ECHE | ECHE | ECHE |
| 5-2 | Phenyl | Phenyl | H, methyl | Phenyl | Phenyl | Phenyl | Phenyl | Phenyl |
| 5-3 | Methyl | Methyl | H, methyl | Methyl | Methyl | Methyl | Methyl | Methyl |
| 5-4 | GlyP | EGCDX | H, methyl | EGCDX | GlyP | EGCDX | EGCDX | GlyP |
| 5-5 | POMMA | POMMA | H, methyl | POMMA | POMMA | POMMA | POMMA | POMMA |
| 5-6 | ECHE | ECHE | H, methyl | ECHE | Phenyl | ECHE | ECHE | Phenyl |
| 5-7 | ECHE | ECHE | H, methyl | ECHE | Methyl | ECHE | ECHE | Methyl |
| 5-8 | ECHE | ECHE | H, methyl | ECHE | GlyP | ECHE | ECHE | GlyP |
| 5-9 | ECHE | ECHE | H, methyl | ECHE | POMMA | ECHE | ECHE | POMMA |
| 5-10 | ECHE | Phenyl | H, methyl | Phenyl | ECHE | Phenyl | Phenyl | ECHE |
| 5-11 | ECHE | Methyl | H, methyl | Methyl | ECHE | Methyl | Methyl | ECHE |
| 5-12 | ECHE | GlyP | H, methyl | GlyP | ECHE | GlyP | GlyP | ECHE |
| 5-13 | ECHE | POMMA | H, methyl | POMMA | ECHE | POMMA | POMMA | ECHE |
| 5-14 | Phenyl | Phenyl | H, methyl | Phenyl | ECHE | Phenyl | Phenyl | ECHE |
| 5-15 | Phenyl | Phenyl | H, methyl | Phenyl | Methyl | Phenyl | Phenyl | Methyl |
| 5-16 | Phenyl | Phenyl | H, methyl | Phenyl | EGCDX | Phenyl | Phenyl | EGCDX |
| 5-17 | Phenyl | Phenyl | H, methyl | phenyl | POMMA | Phenyl | Phenyl | POMMA |
| 5-18 | Phenyl | ECHE | H, methyl | ECHE | Phenyl | ECHE | ECHE | Phenyl |
| 5-19 | Phenyl | Methyl | H, methyl | Methyl | Phenyl | Methyl | Methyl | Phenyl |
| 5-20 | Phenyl | GlyP | H, methyl | GlyP | Phenyl | GlyP | GlyP | Phenyl |
| 5-21 | Phenyl | POMMA | H, methyl | POMMA | Phenyl | POMMA | POMMA | Phenyl |
| 5-22 | Methyl | Methyl | H, methyl | Methyl | ECHE | Methyl | Methyl | ECHE |
| 5-23 | Methyl | Methyl | H, methyl | Methyl | Phenyl | Methyl | Methyl | Phenyl |
| 5-24 | Methyl | Methyl | H, methyl | Methyl | GlyP | Methyl | Methyl | GlyP |
| 5-25 | Methyl | Methyl | H, methyl | Methyl | POMMA | Methyl | Methyl | POMMA |
| 5-26 | Methyl | ECHE | H, methyl | ECHE | Methyl | ECHE | ECHE | Methyl |
| 5-27 | Methyl | Phenyl | H, methyl | Phenyl | Methyl | Phenyl | Phenyl | Methyl |
| 5-28 | Methyl | GlyP | H, methyl | GlyP | Methyl | GlyP | GlyP | Methyl |
| 5-29 | Methyl | POMMA | H, methyl | POMMA | Methyl | POMMA | POMMA | Methyl |
| 5-30 | GlyP | GlyP | H, methyl | GlyP | ECHE | GlyP | GlyP | ECHE |
| 5-31 | GlyP | GlyP | H, methyl | GlyP | Phenyl | GlyP | GlyP | Phenyl |
| 5-32 | GlyP | GlyP | H, methyl | GlyP | Methyl | GlyP | GlyP | Methyl |
| 5-33 | GlyP | GlyP | H, methyl | GlyP | POMMA | GlyP | GlyP | POMMA |
| 5-34 | GlyP | ECHE | H, methyl | ECHE | GlyP | ECHE | ECHE | GlyP |
| 5-35 | GlyP | Phenyl | H, methyl | Phenyl | GlyP | Phenyl | Phenyl | GlyP |
| 5-36 | GlyP | Methyl | H, methyl | Methyl | GlyP | Methyl | Methyl | GlyP |
| 5-37 | GlyP | POMMA | H, methyl | POMMA | GlyP | POMMA | POMMA | GlyP |
| 5-38 | POMMA | POMMA | H, methyl | POMMA | ECHE | POMMA | POMMA | ECHE |
| 5-39 | POMMA | POMMA | H, methyl | POMMA | Phenyl | POMMA | POMMA | Phenyl |
| 5-40 | POMMA | POMMA | H, methyl | POMMA | Methyl | POMMA | POMMA | Methyl |
| 5-41 | POMMA | POMMA | H, methyl | POMMA | GlyP | POMMA | POMMA | GlyP |
| 5-42 | POMMA | ECHE | H, methyl | ECHE | POMMA | ECHE | ECHE | POMMA |
| 5-43 | POMMA | | H, methyl | Phenyl | POMMA | Phenyl | Phenyl | POMMA |
| 5-44 | POMMA | Methyl | H, methyl | Methyl | POMMA | Methyl | Methyl | POMMA |
| 5-45 | POMMA | GlyP | H, methyl | GlyP | POMMA | GlyP | GlyP | POMMA |

**Table 6**

| N o | R6 | R7 | R8 | R9 | R10 | R of X | R of Y | Terminal R of E |
|---|---|---|---|---|---|---|---|---|
| 6-1 | ECHE | POMMA | H, methyl | ECHE | POMMA | POMMA | ECHE | POMMA |
| 6-2 | Phenyl | POMMA | H, ethyl | Phenyl | POMMA | POMMA | Phenyl | POMMA |
| 6-3 | POMMA | ECHE | H, acetyl | Methyl | ECHE | ECHE | Methyl | ECHE |
| 6-4 | Methyl | ECHE | Vinyl, methyl | EGCDX | ECHE | ECHE | EGCDX | ECHE |
| 6-5 | POMMA | F | H, methyl | POMM A | F | F | POMM A | F |
| 6-6 | Propyl | Aminopro pyl | | ECHE | Aminopro pyl | Aminopro pyl | ECHE | Aminopro pyl |
| 6-7 | Phenyl | Phenyl | H, methyl | ECHE | Phenyl | Phenyl | ECHE | Phenyl |
| 6-8 | Methyl | Alkylthiol | H, acetyl | ECHE | Alkylthiol | Alkylthiol | ECHE | Alkylthiol |
| 6-9 | GlyP | Phenyl | Vinyl, methyl | ECHE | Phenyl | Phenyl | ECHE | Phenyl |
| 6-10 | ECHE | Octyl | H, methyl | Phenyl | Octyl | Octyl | Phenyl | Octyl |
| 6-11 | Alkylthiol | Methyl | H, methyl | Methyl | Methyl | Methyl | Methyl | Methyl |
| 6-12 | Phenyl | Octyl | Vinyl, methyl | GlyP | Octyl | Octyl | GlyP | Octyl |
| 6-13 | Octyl | Octyl | H, methyl | POMM A | Octyl | Octyl | POMM A | Octyl |
| 6-14 | Methyl | Methyl | H, F | Phenyl | Methyl | Methyl | Phenyl | Methyl |
| 6-15 | Octyl | GlyP | CF₃, methyl | Phenyl | ECHE | GlyP | Phenyl | ECHE |
| 6-16 | Octyl | GlyP | Vinyl, methyl | Phenyl | Phenyl | GlyP | Phenyl | Phenyl |
| 6-17 | Methyl | Aminopro pyl | H, methyl | Phenyl | POMMA | Aminopro pyl | Phenyl | POMMA |
| 6-18 | GlyP | GlyP | H, F | ECHE | Methyl | GlyP | ECHE | Methyl |
| 6-19 | GlyP | POMMA | CF₃, methyl | Methyl | POMMA | POMMA | Methyl | POMMA |
| 6-20 | Aminopro pyl | Methyl | H, methyl | GlyP | Propyl | Methyl | GlyP | Propyl |
| 6-21 | GlyP | POMMA | Alkylthi ol, methyl | POMM A | Phenyl | POMMA | POMM A | Phenyl |
| 6-22 | POMMA | Propyl | H, acetyl | Methyl | Methyl | Propyl | Methyl | Methyl |
| 6-23 | POMMA | Methyl | Vinyl, methyl | Methyl | GlyP | Methyl | Methyl | GlyP |
| 6-24 | GlyP | GlyP | Vinyl, methyl | Methyl | ECHE | GlyP | Methyl | ECHE |
| 6-25 | Aminopro pyl | GlyP | H, methyl | Methyl | GlyP | GlyP | Methyl | GlyP |
| 6-26 | Methyl | Aminopro pyl | H, F | ECHE | Aminopro pyl | Aminopro pyl | ECHE | Aminopro pyl |
| 6-27 | Methyl | GlyP | CF₃, methyl | Phenyl | GlyP | GlyP | Phenyl | GlyP |
| 6-28 | Methyl | Octyl | H, methyl | GlyP | Octyl | Octyl | GlyP | Octyl |
| 6-29 | Methyl | Methyl | H, acetyl | POMM A | Methyl | Methyl | POMM A | Methyl |
| 6-30 | Aminopro pyl | GlyP | Vinyl, methyl | GlyP | GlyP | GlyP | GlyP | GlyP |
| 6-31 | GlyP | GlyP | H, methyl | GlyP | GlyP | GlyP | GlyP | GlyP |
| 6-32 | POMMA | Aminopro pyl | H, methyl | GlyP | Aminopro pyl | Aminopro pyl | GlyP | Aminopro pyl |
| 6-33 | Methyl | GlyP | Vinyl, methyl | GlyP | GlyP | GlyP | GlyP | GlyP |
| 6-34 | POMMA | POMMA | H, methyl | ECHE | POMMA | POMMA | ECHE | POMMA |
| 6-35 | Propyl | POMMA | H, F | Phenyl | POMMA | POMMA | Phenyl | POMMA |
| 6-36 | Methyl | GlyP | CF₃, methyl | Methyl | GlyP | GlyP | Methyl | GlyP |
| 6-37 | GlyP | Aminopro pyl | Vinyl, methyl | POMM A | Aminopro pyl | Aminopro pyl | POMM A | Aminopro pyl |
| 6-38 | GlyP | Methyl | H, methyl | POMM A | Methyl | Methyl | POMM A | Methyl |
| 6-39 | Aminopro pyl | Methyl | H, F | POMM A | Methyl | Methyl | POMM A | Methyl |
| 6-40 | Aminopro pyl | Methyl | CF₃, methyl | POMM A | Methyl | Methyl | POMM A | Methyl |
| 6-41 | GlyP | Methyl | H, methyl | POMM A | Methyl | Methyl | POMM A | Methyl |
| 6-42 | POMMA | GlyP | Alkylthi ol, methyl | ECHE | GlyP | GlyP | ECHE | GlyP |
| 6-43 | POMMA | Aminopro pyl | H, acetyl | Phenyl | Aminopro pyl | Aminopro pyl | Phenyl | Aminopro pyl |
| 6-44 | POMMA | GlyP | Vinyl, methyl | Methyl | GlyP | GlyP | Methyl | GlyP |
| 6-45 | POMMA | POMMA | H, methyl | GlyP | POMMA | POMMA | GlyP | POMMA |

The condensation rate of the silsesquioxane complex polymer of the present invention may be adjusted to 1 to 99.9% or more to obtain a wide range of applicability by ensuring excellent storage stability. That is, the content of terminal and center SiOR or Si-OR¹ may be adjusted to 50% to 0.01% with regard to the entire couplers of the polymer.

Also, the silsesquioxane complex polymer of the invention may have a weight average molecular weight of 1,000 to 1,000,000, preferably 5,000 to 100,000, and more preferably 7,000 to 50,000. Within this range, the processability and physical properties of the silsesquioxane can be simultaneously enhanced.

The silsesquioxane complex polymer of the invention may be prepared by successively adjusting basicity and acidity using a basic catalyst and an acidic catalyst, and it may employ any one of the manufacturing methods as described below.

Preparation method of silsesquioxane complex polymer represented by chemical formula 1

It comprises a step 1 of mixing a basic catalyst and an organic solvent in a reactor and then adding an organic silane compound to prepare the following two types of chemical formula 4 of which the condensation rate is controlled; a step 2 of adding an acidic catalyst to the reactor to adjust the reaction solution to acidic state in order to incorporate [B]b structure and [D]d(OR²)₂ structure into the chemical formula 4 obtained from the above step 1 and then adding an organic silane compound and stirring them; a step 3 of adding a basic catalyst to the reactor after each reaction of the above step 2 to convert the reaction solution into its basic state and performing condensation reaction; and a step 4 of condensing two or more substances obtained through the above step 3 under basic condition to connect them. The prepared silsesquioxane complex polymer has a structure of the following chemical formula 1-1: 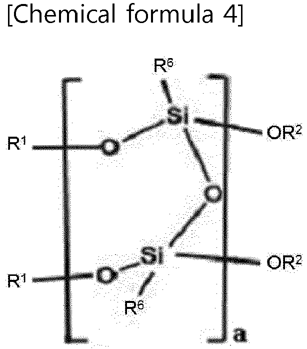 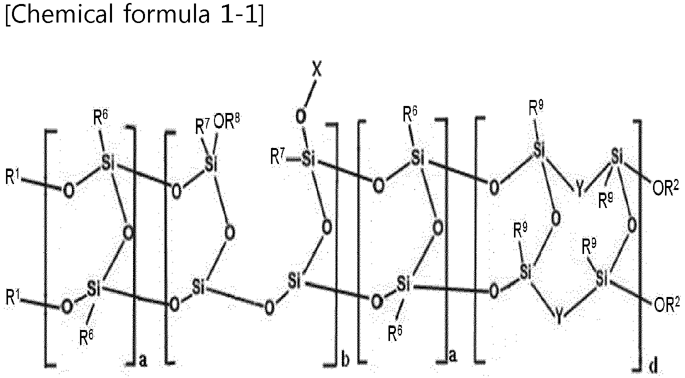 wherein, R, R¹, R², R⁶, R⁷, R⁸, R⁹, X, Y, a, b, and d are as defined in the formulae 1 to 3.

Preparation method of silsesquioxane complex polymer represented by chemical formula 2

It comprises a step 1 of mixing a basic catalyst and an organic solvent in a reactor and then adding an organic silane compound to prepare the following chemical formula 4 of two types of which the condensation rate is controlled; a step 2 of adding an acidic catalyst to the reactor to adjust the reaction solution to acidic state in order to incorporate [B]b structure and [D]d(OR⁴)₂ structure into the chemical formula 4 obtained from the above step 1 and then adding an organic silane compound and stirring them; a step 3 of adding a basic catalyst to the reactor after each reaction of the above step 2 to convert the reaction solution into its basic state and performing condensation reaction; a step 4 of condensing two or more substances obtained through the above step 3 under basic condition to connect them; a step 5 of adding an acidic catalyst to the reactor to adjust the reaction solution to acidic state in order to incorporate [D]d(OR³)₂ structure after the above step 4 and then adding an organic silane compound and stirring them; and a step 6 of adding a basic catalyst to the reactor after the reaction of the above step 5 to convert the reaction solution into its basic state and performing condensation reaction. The prepared silsesquioxane complex polymer has a structure of the following chemical formula 2-1: 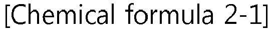 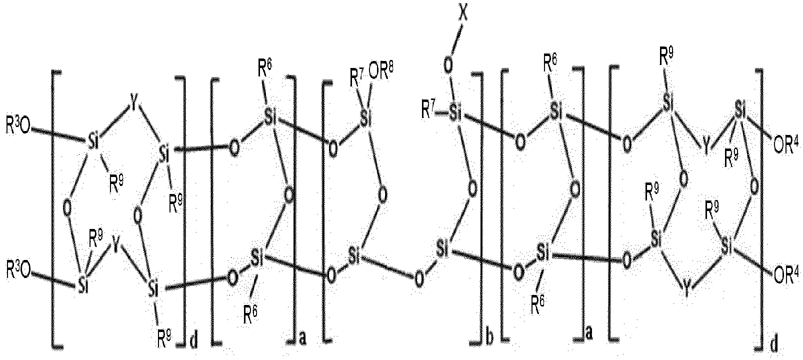 wherein, R, R¹, R², R³, R⁴, R⁶, R⁷, R⁸, R⁹, B, D, X, Y, a, b, and d are as defined in the formulae 1 to 3.

Preparation method of silsesquioxane complex polymer represented by chemical formula 3

It comprises a step 1 of mixing a basic catalyst and an organic solvent in a reactor and then adding an organic silane compound to prepare the following chemical formula 4 of two types of which the condensation rate is controlled; a step 2 of adding an acidic catalyst to the reactor to adjust the reaction solution to acidic state in order to incorporate [B]b structure into the chemical formula 4 obtained from the above step 1 and then adding an organic silane compound and stirring them; a step 3 of adding a basic catalyst to the reactor after each reaction of the above step 2 to convert the reaction solution into its basic state and performing condensation reaction; a step 4 of condensing two or more substances obtained through the above step 3 under basic condition to connect them; a step 5 of adding an acidic catalyst to the reactor to adjust the reaction solution to acidic state in order to incorporate [D]d(OR⁵)₂ structure after the above step 4 and then adding an organic silane compound and stirring them; a step 6 of adding a basic catalyst to the reactor after the reaction of the above step 5 to convert the reaction solution into its basic state and performing condensation reaction; and a step of 7 of adding an acidic catalyst to the reactor to convert the reaction solution into acidic atmosphere in order to incorporate [E]eX₂ structure at the end of the complex polymer after the above step 6 and then mixing an organic silane compound and stirring them. The prepared silsesquioxane complex polymer has a structure of the following chemical formula 3-1: 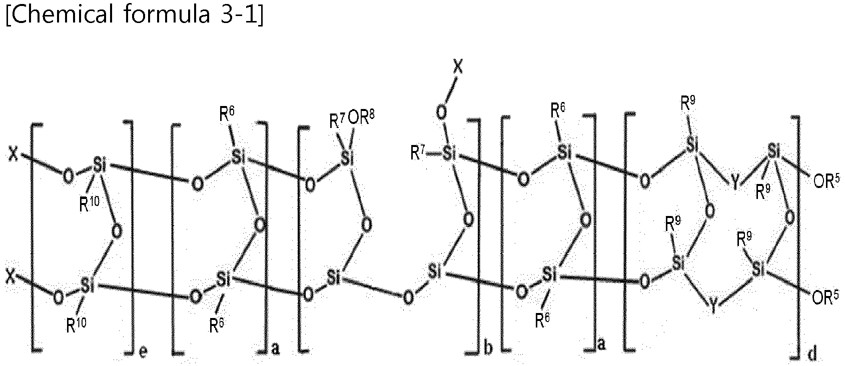 wherein, R, R¹, R², R⁵, R⁶, R⁷, R⁸, R⁹, B, D, E, X, Y, a, b, d, and e are as defined in the formulae 1 to 3.

In the method for preparing the silsesquioxane complex polymer, the basic catalyst preferably may use a mixture catalyst of two or more basic catalysts, and it is neutralized and acidified with an acidic catalyst to induce re-hydrolysis, followed by condensation process under basic condition using a mixture catalyst of two or more basic catalysts again, whereby acidity and basicity can be successively adjusted in a single reactor.

The basic catalyst may be prepared by suitably combining two or more substance selected from a metal type basic catalyst selected from the group consisting of Li, Na, K, Ca and Ba, and an amine type basic catalyst. Preferably, the amine type basic catalyst may be tetramethylammonium hydroxide (TMAH), and the metal basic catalyst may be potassium hydroxide (KOH) or sodium bicarbonate (NaHCO₃). In the mixture catalyst, the content of each component may be optionally adjusted within such a range that the ratio of the amine type basic catalyst and the metal type basic catalyst can be 10 to 90: 10 to 90 parts by weight. Within the above ranges, reactivity between the functional groups and the catalysts can be minimized during hydrolysis, thereby remarkably reducing defects of organic functional groups such as Si-OH or Si-alkoxy to achieve the advantage that the condensation rate can be freely adjusted. In addition, the above acidic catalyst may use any acidic substances ordinarily used in the pertinent art, and for example, it may use common acidic substances such as HCl, H₂SO₄, HNO₃, and CH₃COOH, or use organic acidic substances such as lactic acid, tartaric acid, maleic acid, citric acid, and so on.

In the method for preparing the silsesquioxane complex polymer of the invention, the organic solvent may use any organic solvent ordinarily used in the pertinent art, and for example, it may use alcohols such as methyl alcohol, ethyl alcohol, isopropyl alcohol, butyl alcohol, and cellosolve types, ketones such as acetone, and methyl (isobutyl) ethylketone, glycols such as ethyleneglycol, furans such as tetrahydrofuran, polar solvents such as dimethylformaldehyde, dimethylacetamide and N-methyl-2-pyrrolidone, and various solvents such as hexane, cyclohexane, cyclohexanone, toluene, xylene, cresol, chloroform, dichlorobenzene, dimethylbenzene, trimethylbenzene, pyridine, methylnaphthalene, nitromethane, acrylonitrile, methylene chloride, octadecylamine, aniline, dimethyl sulfoxide, benzyl alcohol and so on.

Further, the organic silane-based compound may use an organic silane comprising R, R¹, R², R³, R⁴, R⁵, R⁶, R⁷, R⁸, R⁹, R¹⁰, R¹¹, or R¹² of chemical formulae 1 to 3 of the silsesquioxane complex polymer of the present invention, and in particular, it may use an organic silane compound comprising a phenyl group or amino group which is effective for improving the non-swelling property by increasing the chemical resistance of the silsesquioxane complex polymer, or an organic silane compound comprising an epoxy group or (meth)acryl group which is effective for improving mechanical strength and hardness of the cured layer by increasing the curing density of the complex polymer.

Specific examples of the organic silane-based compound may include (3-glycidoxypropyl) trimethoxysilane, (3-glycidoxypropyl) triethoxysilane, (3-glycidoxypropyl) methyl dimethoxysilane, (3-glycidoxypropyl) dimethyl silane, 3-(methacryloxypropyl) trimethoxysilane, 3,4-epoxy-butyl trimethoxysilane, 3,4-epoxy-butyl triethoxysilane, 2-(3,4-epoxycyclohexyl) ethyl trimethoxysilane, 2-(3,4-epoxycyclohexyl) ethyl triethoxysilane, aminopropyl triethoxysilane, vinyl trimethoxysilane, vinyl tri-t-butoxy silane, vinyl tri isobutoxy silane, vinyl tri-isopropoxy silane, vinyl tri-phenoxy silane, phenyl triethoxysilane, phenyl trimethoxysilane, aminopropyl trimethoxysilane, N-phenyl-3-aminopropyl trimethoxysilane, dimethyl tetramethoxysilane, diphenyltetramethoxysiloxane, and the like, and they may be used alone or in a combination of two or more. For the final composition to be prepared, it is more preferable to use a mixture of two or more.

Preferably, the pH of the reaction solution of the step 1 of the present invention may be 9 to 11.5, the pH of the reaction solution of the step 2 may be 2 to 4, the pH of the reaction solution of the step 3 may be 8 to 11.5, the pH of the reaction solution of the step 4 may be 9 to 11.5, the pH of the reaction solution of the step 5 may be 2 to 4, the pH of the reaction solution of the step 6 may be 8 to 11.5, and the pH of the reaction solution of the step 7 of preparing the chemical formula 3 may be 1.5 to 4. Within the above ranges, the silsesquioxane complex polymer may be prepared at a high yield and it can also improve the mechanical properties of the prepared silsesquioxane complex polymer.

In another aspect, the present invention provides a coating composition comprising the silsesquioxane complex polymer represented by any one of the above chemical formulae 1 to 3. In the case that the silsesquioxane complex polymer is liquid phase, the coating composition may be applied alone as a solvent-free type, and in the case of solid phase, it can be constituted by including an organic solvent. In addition, the coating composition may further comprise an initiator or a curing agent.

Preferably, the coating composition may comprise the silsesquioxane complex polymer represented by any one of the above chemical formulae 1 to 3, an organic solvent typically used in the pertinent art which is compatible with the complex polymer, and an initiator, and further optionally comprise additives such as a curing agent, a plasticizer, a sunscreen, other functional additives to improve curing properties, heat resistance, UV block, plasticity effects, etc.

In the coating composition of the present invention, the silsesquioxane complex polymer may be included at least 5 parts by weight, preferably 5 to 90 parts by weight, and more preferably 10 to 50 parts by weight with regard to 100 parts by weight of the coating composition. Within the above ranges, the mechanical properties of the cured film of the coating composition may be further improved.

The organic solvent may use not only alcohols such as methyl alcohol, isopropyl alcohol, and cellosolve type, lactates, ketones such as acetone and methyl(isobutyl)ethylketone, glycols such as ethylene glycol, furans such as tetrahydrofuran, and polar solvents such as dimethylformamide, dimethylacetamide, and N-methyl-2-pyrrolidone, but also various solvents such as hexane, cyclohexane, cyclohexanone, toluene, xylene, cresol, chloroform, dichlorobenzene, dimethylbenzene, trimethylbenzene, pyridine, methylnaphthalene, nitromethane, acrylonitrile arc, methylene chloride, octadecylamine, aniline, dimethyl sulfoxide, benzyl alcohol and the like, but is not limited thereto. The amount of the organic solvent may be included as residual amount other than the complex polymer, the initiator, and the optionally added additives.

Also, in the coating composition of the present invention, the initiator or the curing agent may be suitably selected according to the organic functional groups included in the silsesquioxane complex polymer.

As specific examples, where organic functional groups such as unsaturated hydrocarbons, a thiol type, an epoxy type, an amine type, an isocyanate type and the like, of which the post-curing is possible are incorporated, various curing methods using heat or photo are possible. In this case, a change due to the heat or photo can be achieved in the polymer itself, but preferably, the curing process can be achieved by diluting it in the organic solvent as described above.

Also, for the curing and post-reaction of the complex polymer in the present invention, various initiators may be used, and the initiators may be preferably included at 0.1-10 parts by weight with regard to the total weight 100 parts by weight of the composition, and when it is included within the above ranges, it can satisfy transmission rate and coating stability at the same time after the curing.

Further, when the unsaturated hydrocarbons and the like are incorporated into the above organic functional groups, a radical initiator may be used, and the radical initiator may include photo radical initiators such as trichloro acetophenone, diethoxy acetophenone, 1-phenyl-2-hydroxyl-2-methylpropane-1-one, 1-hydroxycyclohexylphenylketone, 2-methyl-1-(4-methyl thiophenyl)-2-morpholinopropane-1-one, 2,4,6-trimethyl benzoyl diphenylphosphine oxide, camphor quinine, 2,2'-azobis(2-methylbutyronitrile), dimethyl-2,2'-azobis(2-methyl butylrate), 3,3-dimethyl-4-methoxy-benzophenone, p-methoxybenzophenone, 2,2-diethoxy acetophenone, and 2,2-dimethoxy-1,2-diphenyl ethan-1-one, thermal radical initiators such as t-butylperoxy maleic acid, t-butylhydroperoxide, 2,4-dichlorobenzoylperoxide, 1,1-di(t-butylperoxy)-3,3,5-trimethylcyclohexane, and N-butyl-4,4'-di(t-butylperoxy)valerate, and a combination thereof.

Further, when the epoxy and the like are included in the above organic functional groups, there can be used, as a photo polymerization initiator (cation), sulfoniums such as triphenylsulfonium and diphenyl-4-(phenylthio) sulfonium, iodoniums such as diphenyl iodonium or bis (dodecyl phenyl) iodonium, diazoniums such as phenyl diazonium, ammoniums such as 1-benzyl-2-cyano-pyridinium or 1-(naphthylmethyl)-2-cyano pyridinium, (4-methylphenyl) [4-(2-methylpropyl)phenyl]-hexafluorophosphate iodonium, bis(4-t-butylphenyl) iodonium hexafluoro phosphate, diphenyl iodonium hexafluorophosphate, diphenyl trifluoro methane iodonium sulfonate, triphenylsulfonium tetra borate, tri-p-toylsulfonium hexafluoro phosphate, tri-p-toylsulfonium trifluoromethane sulfonate, and a combination of Fe cations such as (2,4-cyclopentadiene-1-yl)[(1-methylethyl)benzene]-Fe and [BQ₄]⁻ onium salt such as BF₄⁻, PF₆⁻, and SbF₆⁻ (wherein Q is a phenyl group substituted with at least two fluorines or trifluoromethyl groups).

The cationic initiators which act by heat may include cationic or protonic catalysts such as triple acid salts, boron trifluoride ether complex and boron trifluoride, various onium salts such as ammonium salt, phosphonium salt and sulfonium salt, and methyltriphenyl phosphonium bromide, ethyltriphenyl phosphonium bromide, phenyltriphenyl phosphonium bromide, etc., and these initiators can also be added in various mixture forms and they can further be mixed with the various radical initiators described in the above.

In addition, according to the type of the organic functional groups, there can be used amine curing agents such as ethylene diamine, triethylene tetramine, tetraethylene pentamine, 1,3-diaminopropane, dipropylene triamine, 3-(2-aminoethyl)amino-propylamine, N,N'-bis(3-aminopropyl)ethylenediamine, 4,9-dioxadodecan-1,12-diamine, 4,7,10-trioxatridecan-1,13-diamine, hexamethylene diamine, 2-methylpentamethylenediamine, 1,3-bisaminomethylcyclohexane, bis(4-aminocyclo-hexyl)methane, norbornenediamine, 1,2-diaminocyclohexane and the like.

Further, as a curing accelerator for promoting the curing action, there can be used triazine based compounds such as acetoguanamine, benzoguanamine and 2,4-diamino-6-vinyl-s-triazine, imidazole based compounds such as imidazole, 2-methylimidazole , 2-ethyl-4-methylimidazole, 2-phenyl imidazole, 2-phenyl-4-methylimidazole, vinyl imidazole and 1-methylimidazole, 1,5-diazabicyclo [4.3.0] nonen-5,1,8--diazabicyclo [5.4.0] undecene-7, triphenylphosphine, diphenyl (p-trill) phosphine, tris(alkylphenyl) phosphine, tris(alkoxyphenyl) phosphine, ethyl triphenyl phosphonium phosphate, tetrabutylphosphonium hydroxide, tetrabutylphosphonium acetate, tetrabutylphosphonium hydrogen difluoride, tetrabutyl phosphonium dihydrogen trifluoro and the like.

In addition, acid anhydride curing agents such as phthalic anhydride, trimellitic anhydride, pyromellitic anhydride, maleic anhydride, tetrahydrophthalic anhydride, methylhexahydrophthalic anhydride, methyltetrahydrophthalic anhydride, nadic methyl anhydride, nadic hydrogenated methyl anhydride, trialkyltetrahydrophthalic anhydride, dodecenyl succinic anhydride, 2,4-diethyl glutaric anhydride and the like may also be used widely.

The curing agent may be preferably included at 0.1-10 parts by weight with regard to 100 parts by weight of the composition.

Furthermore, the present invention may further comprise additives such as a UV absorber, an antioxidant, an anti-foaming agent, a leveling agent, a water repellent, a flame retardant, an adhesion improver and the like for the purpose of improving hardness, strength, durability, and moldability through the curing process or post-reaction. The use of the additives is not particularly restricted, but they may be suitably added within such a range that is not detrimental to the characteristics of the substrate, that is, the physical properties such as flexibility, transparency, heat resistance, hardness, strength and the like. The additives may be each independently included at 0.1-10 parts by weight with regard to 100 parts by weight of the composition.

As the additives to be used in the present invention, there are polyether-modified polydimethylsiloxane (for example, BYK company products BYK-300, BYK-301, BYK-302, BYK-331, BYK-335, BYK-306, BYK-330, BYK-341, BYK-344, BYK-307, BYK-333, BYK-310, etc.), polyether modified hydroxyfunctional poly-dimethyl-siloxane (for example, BYK-308, BYK-373, etc.), methylalkylpolysiloxane (for example, BYK-077, BYK-085, etc.), polyether modified methylalkylpolysiloxane (for example, BYK-320, BYK-325, etc.), polyester modified poly-methyl-alkyl-siloxane (for example, BYK-315, etc.), aralkyl modified methylalkyl polysiloxane (for example, BYK-322, BYK-323, etc.), polyester modified hydroxy functional polydimethylsiloxane (for example, BYK-370, etc.), acrylic functional polyester modified polydimethylsiloxane (for example, BYK-371, BYK-UV 3570, etc.), polyether-polyester modified hydroxy functional polydimethylsiloxane (for example, BYK-375, etc.), polyether modified dimethylpolysiloxane (for example, BYK-345, BYK-348, BYK-346, BYK-UV3510, BYK-332, BYK-337, etc.), non-ionic acrylic copolymer (for example, BYK-380, etc.), ionic acrylic copolymer (for example, BYK-381, etc.), polyacrylate (for example, BYK-353, BYK-356, BYK-354, BYK-355, BYK-359, BYK-361 N, BYK-357, BYK-358 N, BYK-352, etc.), polymethacrylate (for example, BYK-390, etc.), polyether modified acryl functional polydimethylsiloxane (for example, BYK-UV 3500, BYK-UV3530, etc.), polyether modified siloxane (for example, BYK-347, etc.), alcohol alkoxylates (for example, BYK-DYNWET 800, etc.), acrylate (for example, BYK-392, etc.), silicone modified polyacrylate (OH-functional) (for example, BYK-Silclean 3700, etc.), and so on.

The coating composition of the present invention can be applied to various materials to improve high surface hardness, mechanical strength and heat resistance. The thickness of coating can be optionally adjusted, and it may be 0.01 to 500 um, preferably 0.1 to 300 um, and more preferably 1 to 100 um. For example, the above materials may be metals, ceramics, plastics, woods, paper, glass or fiber, and more specifically, as a specific article coated onto a certain material, it may be a protective film for cellular phones or displays.

In the present invention, a method for coating the coating composition may be optionally selected and carried out by those skilled in the art among known methods such as spin coating, bar coating, slit coating, dip coating, a natural coating, reverse coating, roll coating, spin coating, curtain coating, spray coating, a gravure coating, and so on.

The silsesquioxane complex polymer prepared in accordance with the present invention can have easy processability of the linear and complex polymer and excellent physical properties of the crystal silsesquioxane at the same time by comprising the silsesquioxane ladder chain and complex chain consisting of linear silsesquioxane polymers, and the cage type silsesquioxane chain, and can be applied widely in the industry where organic-inorganic hybrid polymers are to be applied by having an easy curing process through the organic functional groups included in the structure. Also, it can be widely used as a main material, an additive or various coating materials by basically possessing excellent optical properties of silicon, physical properties, heat resistance properties, etc.

For a better understanding of the present invention, preferred examples follow. The following examples are intended to merely illustrate the invention without limiting the scope of the invention.

### EXAMPLES

### Example 1: Synthesis of Silsesquioxane A-B-A-D Structure Complex Polymer

Synthesis procedure was carried out by successive hydrolysis and condensation in stages as described below.

### [Example 1-a] Preparation of Catalyst

To control basicity, catalyst 1a was prepared by mixing tetramethylammonium hydroxide (TMAH) 25 wt% aqueous solution with 10 wt% potassium hydroxide (KOH) aqueous solution.

### [Example 1-b] Synthesis of Linear Silsesquioxane (A precursor)

5 Parts by weight of distilled water, 15 parts by weight of tetrahydrofuran, and 1 part by weight of the catalyst prepared in Example 1-a were dropwise added in a dry flask equipped with a cooling tube and a stirrer, and stirred at a room temperature for one hour, and after that, 20 parts by weight of 2-(3,4-epoxycyclohexyl)ethyltrimethoxysilane were dropwise added thereto and 15 parts by weight of tetrahydrofuran were dropwise added again, and then the mixture was further stirred for 5 hours. The stirring mixture solution was taken and rinsed twice to remove the catalyst and impurities, and after filtration, it was confirmed that SI-OH functional groups were generated at the terminal group through the IR analysis (3200 cm⁻¹) and as a result of measuring its molecular weight, it was confirmed that silsesquioxane of a linear structure has a styrene-converted molecular weight of 6,000.

### [Example 1-c] Synthesis of Linear Silsesquioxane Structure (Synthesis of A-B precursor)

5 Parts by weight of distilled water, 40 parts by weight of tetrahydrofuran, and 0.5 part by weight of the catalyst prepared in Example 1-a were dropwise added in a dry flask equipped with a cooling tube and a stirrer and stirred at a room temperature for one hour, and after that, 10 parts by weight of 2-(3,4-epoxycyclohexyl)ethyltrimethoxysilane were dropwise added thereto and 20 parts by weight of tetrahydrofuran were dropwise added again, and then the mixture was further stirred for 2 hours. The stirring mixture solution was taken and rinsed twice to remove the catalyst and impurities, and after filtration, a linear silsesquioxane where residual alkoxy group is 0.1 mmol/g or less through ¹H-NMR analysis was obtained, which is a portion used to subsequently generate a cage type by a successive reaction. The configuration analysis of the linear structure was done through XRD analysis, which confirmed that its overall structure was a linear structure. As a result of measuring its molecular weight, it was confirmed that the silsesquioxane of a linear structure has a styrene-converted molecular weight of 8,000.

### [Example 1-d] Synthesis of Linear Silsesquioxane Structure (Synthesis of A-B-A precursor)

5 Parts by weight of distilled water, 5 parts by weight of tetrahydrofuran, and 10 part by weight of the catalyst prepared in Example 1-a were dropwise added in a dry flask equipped with a cooling tube and a stirrer and stirred at a room temperature for one hour, and after that, 20 parts by weight of Example 1-b precursor and 1-c precursor respectively were dropwise added thereto and 10 parts by weight of tetrahydrofuran were dropwise added again, and then the mixture was further stirred for 24 hours. The stirring mixture solution was taken and rinsed twice to remove the catalyst and impurities, and after filtration, it was confirmed that SI-OH functional groups were generated at the terminal group through the IR analysis (3200 cm⁻¹) and as a result of measuring its molecular weight, it was confirmed that the silsesquioxane of a linear structure has a styrene-converted molecular weight of 15,000.
¹H-NMR (CDCl₃) δ 3.7, 3.4, 3.3(broad), 3.1, 2.8, 2.6, 1.5(broad), 0.6.

### [Example 1-e] Production of Successive Cage Structure (Incorporation of D structure)

5 Parts by weight of 0.36 wt% HCl aqueous solution were very slowly dropwise added to the above Example 1-d mixture solution to adjust pH to acidic condition and stirred at a temperature of 4 °C for 30 min. Thereafter, 5 parts by weight of diphenyltetramethoxydisiloxane were dropwise added at a time to achieve stable hydrolysis, and after one-hour stirring, 7 parts by weight of the catalyst prepared in Example 1-a were added again to adjust the pH of the mixture solution to basic condition. In this process, unlikely the linear polymer, a precursor of D structure where alkoxy is open was formed. A small amount of the sample was taken and examined to see the residual rate of methoxy using H-NMR and IR analysis, and when the residual rate was 10%, 10 parts by weight of 0.36 wt% HCl aqueous solution were slowly dropwise added to adjust its pH to acidic condition. After that, 1 part by weight of phenyltrimethoxysilane was dropwise added at a time, and after 15-min stirring, 20 parts by weight of the catalyst prepared in Example 1-a were added. After 4-hour mixing and stirring, it was confirmed that a cage type polymer was produced in the polymers. After that, the temperature was changed into a room temperature, and tetrahydrofuran in the mixture solution was eliminated using vacuum to convert the whole reactants into an aqueous solution mixture. After 4-hour mixing and stirring, a portion was taken and analyzed, and as a result of ²⁹Si-NMR analysis, it was confirmed that the analysis peaks of the structure incorporated using the phenyl groups appeared in two sharp forms and a polymer such as chemical formula 1 was prepared without any separate residual by-products. In addition, the styrene-converted molecular weight was measured as 18,000.
²⁹Si-NMR (CDCl₃) δ -68.2, -72.3(broad), -81.1(sharp), -80.8(sharp),-82.5(broad)

### [Example 1-f] Incorporation of X into B structure (Completion of A-B-A-D structure)

The organic layer of the outcome obtained in the above Example 1-e was prepared without any separate purification and then its terminal was converted into a cage structure using a 3-functional monomer. 100 parts by weight of the substance obtained in Example 1-e were dissolved in 50 parts by weight of tetrahydrofuran and then 5 parts by weight of distilled water were added thereto to prepare a mixture solution. Thereafter, 10 parts by weight of 0.36 wt% HCl were added to the prepared mixture solution, stirred for 10 min and then, 3 parts by weight of methyltrimethoxysilane were dropwise added at a time to achieve stable hydrolysis. After 24-hour stirring, 3 parts by weight of the catalyst prepared in Example 1-a were added again to adjust the pH of the mixture solution to basic condition. In this process, a cage type polymer was incorporated into X portion of B structure, and reaction occurred successively in the reactor to form a polymer such as chemical formula 1. However, since other by-products were obtained altogether, separate purification was needed. Thereafter, the temperature was changed into a room temperature, and tetrahydrofuran in the mixture solution was eliminated using vacuum to prepare purification.

### [Example 1-g] Removal of By-products and Yield of Outcome through Precipitation and Recrystallization

200 Parts by weight of methylenechloride were added to the mixture of which the reaction was complete in the above Example 1-f, were subject to fractionation washing along with distilled water, and when the pH of the distilled water layer indicated neutral, the solvent was completely eliminated using vacuum under a reduced pressure. Thereafter, the product was precipitated twice in methanol to remove unreacted monomers, and after 30 parts by weight were dissolved in a solvent where tetrahydrofuran and aqueous solution were mixed at a weight ratio of 9.5:0.5, it was stored at the temperature of -20 °C for two days. This was done to make purification easy by promoting recrystallization of the substances which were not incorporated into the polymer and were closed as a cage structure.

After the filtration of the solid substances obtained after the recrystallization process, it was confirmed that the polymer of chemical formula 1 was obtained without several by-products using vacuum under a reduced pressure. In addition, when comparing the GPC results and NMR results, it was confirmed, from the fact that a cage type in a sharp form was obtained as a resultant without any low molecules obtained alone from the growth of the polymer of each step, that the complex polymer could be obtained without any problems. This time, the molecular weight was 24,000 in styrene conversion value.

Further, silsesquioxane complex polymers were prepared by applying monomers listed in the following Table 7. The methods used in the above Example 1 were equally applied for their preparation.

**Table 7**

| Method | Monomer applied in 1-b,c methods | Monomer applied in 1-e method | Monomer applied in 1-f method | Molecular weight (Mw) |
|---|---|---|---|---|
| 1 | ECHETMS | PTMDS | MTMS | 24,000 |
| 1-1 | PTMS | PTMDS | PTMS | 11,000 |
| 1-2 | MTMS | MTMDS | METMS | 13,000 |
| 1-3 | GPTMS | GPTMDS | GPTMS | 23,000 |
| 1-4 | MAPTMS | MAPTM DS | MAPTMS | 14,500 |
| 1-5 | ECHETMS | ECHETMDS | ECHETMS | 12,500 |
| 1-6 | ECHETMS | MTMDS | MTMS | 53,000 |
| 1-7 | ECHETMS | GPTMDS | GPTMS | 11,000 |
| 1-8 | ECHETMS | MAPTM DS | MAPTMS | 9,000 |
| 1-9 | PTMS | ECHETMDS | ECHETMS | 48,000 |
| 1-10 | PTMS | MTMDS | MTMS | 90,000 |
| 1-11 | PTMS | GPTMDS | GPTMS | 32,000 |
| 1-12 | PTMS | MAPTM DS | MAPTMS | 150,000 |
| 1-13 | MTMS | ECHETMDS | ECHETMS | 17,000 |
| 1-14 | MTMS | PTMDS | PTMS | 38,500 |
| 1-15 | MTMS | GPTMDS | GPTMS | 15,000 |
| 1-16 | MTMS | MAPTMDS | MAPTMS | 17,000 |
| 1-17 | GPTMS | ECHETMDS | ECHETMS | 6,000 |
| 1-18 | GPTMS | PTMDS | PTMS | 18,000 |
| 1-19 | GPTMS | MTMDS | MTMS | 457,000 |
| 1-20 | GPTMS | MAPTM DS | MAPTMS | 16,000 |
| 1-21 | MAPTMS | ECHETMDS | ECHETMS | 97,000 |
| 1-22 | MAPTMS | PTMDS | PTMS | 951,000 |
| 1-23 | MAPTMS | MTMDS | MTMS | 15,000 |
| 1-24 | MAPTMS | GPTMDS | GPTMS | 12,000 |

In the above Table 7, ECHETMS refers to 2-(3,4-epoxycyclohexyl) ethyltrimethoxysilane, GPTMS refers to glycidoxypropytrimethoxysilane, MAPTMS refers to (methacryloyloxy) propyltrimethoxysilane, PTMS refers to phenyltrimethoxysilane, MTMS refers to Methyltrimethoxysilane, ECHETMDS refers to di(epoxycyclohexyethyl) tetramethoxy disiloxane, GPTMDS refers to di (glycidoxypropyl) tetramethoxy disiloxane, MAPTMDS refers to di (methacryloyloxy) propy, PTMDS refers to di (phenyl) tetramethoxy disiloxane, and MTMDS refers to di(methyl) tetramethoxy disiloxane.

### Example 2: Synthesis of Complex Silsesquioxane Polymer of D-A-B-A-D Structure

To prepare a complex polymer of D-A-B-A-D structure, the following examples were carried out. For the preparation of the catalysts and linear structures, the methods of Examples 1-a, b, c and d were used in the same way, and after that, to prepare successive D-A-B-A-D structure, the following preparation methods were carried out.

### [Example 2-a] pH Conversion Reaction for Excess Production of D structure

15 Parts by weight of 0.36 wt% HCl aqueous solution were very slowly added to the mixture solution of Example 1-d of which the reaction was in progress, to adjust pH to acidic condition, and stirred at the temperature of 4 °C for 30 min. Thereafter, diphenyltetramethoxydisiloxane was prepared in an amount of 25 parts by weight which is 5 times of Example 1-e and dropwise added at a time, and after one-hour stirring, 20 parts by weight of the catalyst prepared in Example 1-a were added again to adjust the pH of the mixture solution to basic condition. After the reaction was complete, the temperature was changed into a room temperature, tetrahydrofuran in the mixture solution was eliminated using vacuum to convert the whole reactants into an aqueous solution mixture. After 4-hour mixing and stirring, a portion was taken and analyzed, and as a result of ²⁹Si-NMR and ¹H-NMR analysis, it was confirmed that the amount of alkoxy group present in the B structure was changed into 0.006 mmol/g and the repeat unit of B and D was incorporated at about 5:5 ratio. In addition, the styrene-converted molecular weight was measured as 32,000. Furthermore, although a cage type structure was incorporated, there was no molecular weight distribution for a single cage type substance in the GPC forms of the polymer, and it was thus confirmed that the cage type structure was well incorporated into the polymer chain via successive reaction.
¹H-NMR (CDCl₃) δ 7.5, 7.2, 3.7, 3.4, 3.3 (broad), 3.1, 2.8, 2.6, 1.5 (broad), 0.6. ²⁹Si-NMR (CDCl₃) δ -72.5 (broad), -81.1 (sharp), -80.8 (sharp), -79.9 (sharp), -82.5 (broad)

### [Example 2-b] Incorporation of X into B Structure

The organic layer of the outcome obtained in the above Example 2-a was prepared without any separate purification and then its terminal was converted into a cage structure using a 3-functional monomer. 100 parts by weight of the substance obtained in Example 2-a were dissolved in 50 parts by weight of tetrahydrofuran and then 5 parts by weight of distilled water were added thereto to prepare a mixture solution. Thereafter, 10 parts by weight of 0.36 wt% HCl were added to the prepared mixture solution, stirred for 10 min and then, 3 parts by weight of methyltrimethoxysilane were dropwise added at a time to achieve stable hydrolysis. After 24-hour stirring, 3 parts by weight of the catalyst prepared in Example 1-a were added again to adjust the pH of the mixture solution to basic condition. In this process, a cage type polymer was incorporated into the X portion of the B structure, and reaction occurred successively in the reactor to form a polymer such as chemical formula 2. However, since other by-products were obtained altogether, separate purification was needed. Thereafter, the temperature was changed into a room temperature, and tetrahydrofuran in the mixture solution was eliminated using vacuum to prepare purification.

### [Example 2-c] Removal of By-products and Yield of Outcome through Precipitation and Recrystallization

200 Parts by weight of methylenechloride were added to the mixture of which the reaction was complete in the above Example 2-b, were subject to fractionation washing along with distilled water, and when the pH of the distilled water layer indicated neutral, the solvent was completely eliminated using vacuum under a reduced pressure. Thereafter, the product was precipitated twice in methanol to remove unreacted monomers, and after 30 parts by weight were dissolved in a solvent where tetrahydrofuran and aqueous solution were mixed at a weight ratio of 9.5:0.5, it was stored at the temperature of -20 °C for two days. This was done to make purification easy by promoting the recrystallization of the substances which were not incorporated into the polymer and were closed as a cage structure.

After the filtration of the solid substances obtained after the recrystallization process, it was confirmed that the polymer of chemical formula 2 was obtained without several by-products using vacuum under a reduced pressure. In addition, when comparing the GPC results and NMR results, it was confirmed, from the fact that a cage type in a sharp form was obtained as a resultant without any low molecules obtained alone from the growth of the polymer of each step, that the complex polymer could be obtained without any problems. This time, the molecular weight was 36,000 in styrene conversion value and in particular, the results of chemical formula 2 are as follows.
²⁹Si-NMR (CDCl₃) δ -72.5(broad), -81.1(sharp), -80.8(sharp), -79.9(sharp),-81.5(sharp), -82.5(broad)

Further, silsesquioxane complex polymers were prepared by applying monomers listed in the following Table 8. The methods used in the above Example 2 were equally applied for their preparation.

**Table 8**

| Method No. | Monomer applied in 1-b,c methods | Monomer applied in 2-a method | Monomer applied in 2-b method | Molecular weight (Mw) |
|---|---|---|---|---|
| 2 | ECHETMS | PTMDS | MTMS | 36,000 |
| 2-1 | PTMS | PTMDS | PTMS | 14,000 |
| 2-2 | MTMS | MTMDS | MTMS | 18,000 |
| 2-3 | GPTMS | GPTMDS | GPTMS | 27,000 |
| 2-4 | MAPTMS | MAPTMDS | MAPTMS | 19,500 |
| 2-5 | ECHETMS | ECHETMDS | ECHETMS | 19,500 |
| 2-6 | ECHETMS | MTMDS | MTMS | 58,000 |
| 2-7 | ECHETMS | GPTMDS | GPTMS | 19,000 |
| 2-8 | ECHETMS | MAPTM DS | MAPTMS | 12,000 |
| 2-9 | PTMS | ECHETMDS | ECHETMS | 53,000 |
| 2-10 | PTMS | MTMDS | MTMS | 113,000 |
| 2-11 | PTMS | GPTMDS | GPTMS | 42,000 |
| 2-12 | PTMS | MAPTMDS | MAPTMS | 173,000 |
| 2-13 | MTMS | ECHETMDS | ECHETMS | 19,000 |
| 2-14 | MTMS | PTMDS | PTMS | 45,000 |
| 2-15 | MTMS | GPTMDS | GPTMS | 32,000 |
| 2-16 | MTMS | MAPTMDS | MAPTMS | 34,000 |
| 2-17 | GPTMS | ECHETMDS | ECHETMS | 12,000 |
| 2-18 | GPTMS | PTMDS | PTMS | 24,000 |
| 2-19 | GPTMS | MTMDS | MTMS | 486,000 |
| 2-20 | GPTMS | MAPTM DS | MAPTMS | 32,000 |
| 2-21 | MAPTMS | ECHETMDS | ECHETMS | 181,000 |
| 2-22 | MAPTMS | PTMDS | PTMS | 981,000 |
| 2-23 | MAPTMS | MTMDS | MTMS | 21,000 |
| 2-24 | MAPTMS | GPTMDS | GPTMS | 20,000 |

In the above Table 8, ECHETMS refers to 2-(3,4-epoxycyclohexyl) ethyltrimethoxysilane, GPTMS refers to glycidoxypropytrimethoxysilane, MAPTMS refers to (methacryloyloxy) propyltrimethoxysilane, PTMS refers to phenyltrimethoxysilane, MTMS refers to methyltrimethoxysilane, ECHETMDS refers to di(epoxycyclohexyethyl) tetramethoxy disiloxane, GPTMDS refers to di (glycidoxypropyl) tetramethoxy disiloxane, MAPTMDS refers to di (methacryloyloxy) propy, PTMDS refers to di(phenyl) tetramethoxy disiloxane, and MTMDS refers to di(methyl) tetramethoxy disiloxane.

### Example 3: Synthesis of Silsesquioxane E-A-B-A-D Structure Complex Polymer

To prepare a complex polymer of E-A-B-A-D structure, the following examples were carried out. For the preparation of the catalysts and linear structures, the methods of Examples 1 were used in the same way to prepare A-B-A-D structure, and after that, to produce E-A-B-A-D structure, the following preparation methods were carried out.

### [Example 3-a] Production of Chain Terminal E structure

20 Parts by weight of methylenechloride were dropwise added to the mixture obtained in Example 1-g without separate purification, 5 parts by weight of 0.36 wt% HCl aqueous solution were dropwise added to adjust pH to acidic condition, and the mixture was stirred at the temperature of 4 °C for 30 min. Thereafter, 1 part by weight of dimethyltetramethoxysilane was dropwise added at a time. In the process, portions which were not yet hydrolyzed in the molecular structure were easily converted into hydrolysates in an acidic aqueous solution layer separated from the solvent and condensed with the produced separate reactants in the organic solvent layer to incorporate E into the terminal unit. After 5-hour stirring, the stirring of the reaction was ceased and the temperature of the reactor was adjusted to a room temperature.

### [Example 3-b] Cage incorporation into X of B structure and Terminal E structure

The organic layer of the outcome obtained in the above Example 3-a was prepared without any separate purification and then its terminal was converted into a cage structure using a 3-functional monomer. 3 Parts by weight of methyltrimethoxysilane were dropwise added at a time to the mixture solution of Example 3-a of which the reaction was in progress, to achieve stable hydrolysis. After 24-hour stirring, 3 parts by weight of the catalyst prepared in Example 1-a were added again to adjust the pH of the mixture solution to basic condition. In this process, a cage type polymer was incorporated into the terminal of E structure, and reaction occurred successively in the reactor to form a polymer such as chemical formula 3. However, since other by-products were obtained altogether, separate purification was needed. Thereafter, the temperature was changed into a room temperature, and tetrahydrofuran in the mixture solution was eliminated using vacuum to prepare purification.

### [Example 3-c] Removal of By-products and Yield of Outcome through Precipitation and Recrystallization

After the mixture of which the reaction was complete in the above Example 3-b was obtained, it was washed with distilled water, and when the pH of the distilled water layer indicated neutral, the solvent was completely eliminated using vacuum under a reduced pressure. Thereafter, the product was precipitated twice in methanol to remove unreacted monomers, and after 30 parts by weight were dissolved in a solvent where tetrahydrofuran and aqueous solution were mixed at a weight ratio of 9.5:0.5, it was stored at the temperature of -20 °C for two days. This was done to make purification easy by promoting the recrystallization of the substances which were not incorporated into the polymer and were closed as a cage structure.

After the filtration of the solid substances obtained after the recrystallization process, it was confirmed that the polymer of chemical formula 3 was obtained without several by-products using vacuum under a reduced pressure. In addition, when comparing the GPC results and NMR results, it was confirmed, from the fact that a cage type in a sharp form was obtained as a resultant without any low molecules obtained alone from the growth of the polymer of each step, that the complex polymer could be obtained without any problems. This time, the molecular weight was 28,000 in styrene conversion value.

Further, silsesquioxane complex polymers were prepared by applying monomers listed in the following Table 9. The methods used in the above Example 3 were equally applied for their preparation.

**Table 9**

| Method No. | Monomer applied in 1-b,c methods | Monomer applied in 1-e method | Monomer applied in 3-a method | Monomer applied in 3-b method | Mw |
|---|---|---|---|---|---|
| 3 | ECHETMS | PTMDS | MTMDS | MAPTMS | 28,000 |
| 3-1 | ECHETMS | ECHETMDS | ECHETMDS | ECHETMS | 24,000 |
| 3-2 | PTMS | PTMDS | PTMDS | PTMS | 21,000 |
| 3-3 | MTMS | MTMDS | MTMDS | MTMS | 36,000 |
| 3-4 | GPTMS | ECHETMDS | GPTMDS | GPTMS | 62,000 |
| 3-5 | MAPTMS | MAPTMDS | MAPTMDS | MAPTMS | 153,000 |
| 3-6 | ECHETMS | ECHETMDS | PTMDS | PTMS | 24,000 |
| 3-7 | ECHETMS | ECHETMDS | MTMDS | MTMS | 19,000 |
| 3-8 | ECHETMS | ECHETMDS | GPTMDS | GPTMS | 26,000 |
| 3-9 | ECHETMS | ECHETMDS | MAPTMDS | MAPTMS | 99,000 |
| 3-10 | ECHETMS | PTMDS | ECHETMDS | ECHETMS | 21,000 |
| 3-11 | ECHETMS | MTMDS | ECHETMDS | ECHETMS | 142,000 |
| 3-12 | ECHETMS | GPTMDS | ECHETMDS | ECHETMS | 70,000 |
| 3-13 | ECHETMS | MAPTMDS | ECHETMDS | ECHETMS | 72,000 |
| 3-14 | PTMS | PTMDS | ECHETMDS | ECHETMS | 15,000 |
| 3-15 | PTMS | PTMDS | MTMDS | MTMS | 51,000 |
| 3-16 | PTMS | PTMDS | ECHETMDS | ECHETMS | 85,000 |
| 3-17 | PTMS | PTMDS | MAPTMDS | MAPTMS | 95,000 |
| 3-18 | PTMS | ECHETMDS | PTMDS | PTMS | 160,000 |
| 3-19 | PTMS | MTMDS | PTMDS | PTMS | 240,000 |
| 3-20 | PTMS | GPTMDS | PTMDS | PTMS | 56,000 |
| 3-21 | PTMS | MAPTMDS | PTMDS | PTMS | 71,000 |
| 3-22 | MTMS | MTMDS | ECHETMDS | ECHETMS | 81,000 |
| 3-23 | MTMS | MTMDS | PTMDS | PTMS | 63,000 |
| 3-24 | MTMS | MTMDS | GPTMDS | GPTMS | 121,000 |
| 3-25 | MTMS | MTMDS | MAPTMDS | MAPTMS | 153,000 |
| 3-26 | MTMS | ECHETMDS | MTMDS | MTMS | 82,000 |
| 3-27 | MTMS | PTMDS | MTMDS | MTMS | 63,000 |
| 3-28 | MTMS | GPTMDS | MTMDS | MTMS | 310,000 |
| 3-29 | MTMS | MAPTMDS | MTMDS | MTMS | 125,000 |
| 3-30 | GPTMS | GPTMDS | ECHETMDS | ECHETMS | 97,000 |
| 3-31 | GPTMS | GPTMDS | PTMDS | PTMS | 45,000 |
| 3-32 | GPTMS | GPTMDS | MTMDS | MTMS | 61,000 |
| 3-33 | GPTMS | GPTMDS | MAPTMDS | MAPTMS | 52,000 |
| 3-34 | GPTMS | ECHETMDS | GPTMDS | GPTMS | 37,000 |
| 3-35 | GPTMS | PTMDS | GPTMDS | GPTMS | 365,000 |
| 3-36 | GPTMS | MTMDS | GPTMDS | GPTMS | 85,000 |
| 3-37 | GPTMS | MAPTMDS | GPTMDS | GPTMS | 75,000 |
| 3-38 | MAPTMS | MAPTMDS | ECHETMDS | ECHETMS | 144,000 |
| 3-39 | MAPTMS | MAPTMDS | PTMDS | PTMS | 85,000 |
| 3-40 | MAPTMS | MAPTMDS | MTMDS | MTMS | 60,000 |
| 3-41 | MAPTMS | MAPTMDS | GPTMDS | GPTMS | 53,000 |
| 3-42 | MAPTMS | ECHETMDS | MAPTMDS | MAPTMS | 12,000 |
| 3-43 | MAPTMS | PTMDS | MAPTMDS | MAPTMS | 10,000 |
| 3-44 | MAPTMS | MTMDS | MAPTMDS | MAPTMS | 32,000 |
| 3-45 | MAPTMS | GPTMDS | MAPTMDS | MAPTMS | 231,000 |

In the above Table 9, ECHETMS refers to 2-(3,4-epoxycyclohexyl) ethyltrimethoxysilane, GPTMS refers to glycidoxypropytrimethoxysilane, MAPTMS refers to (methacryloyloxy) propyltrimethoxysilane, PTMS refers to phenyltrimethoxysilane, MTMS refers to methyltrimethoxysilane, ECHETMDS refers to di(epoxycyclohexyethyl) tetramethoxy disiloxane, GPTMDS refers to di (glycidoxypropyl) tetramethoxy disiloxane, MAPTMDS refers to di (methacryloyloxy) propy, PTMDS refers to di(phenyl) tetramethoxy disiloxane, and MTMDS refers to di(methyl) tetramethoxy disiloxane.

### Example 4: Preparation and Process of Coating Composition using Silsesquioxane Complex Polymer

The silsesquioxane complex polymers obtained in Examples 1, 2 and 3 were used to induce a self-curing process, or to prepare a coating composition.

### [Example 4-a] Preparation of Photosetting Resin Composition

30 G of the complex polymers obtained in Examples 1 to 3, respectively were each dissolved at 30 wt% in methylisobutylketone to prepare a coating compositions of 100 g. Thereafter, 3 parts by weight of chloroacetophenone and 1 part by weight of BYK-347, and 1 part by weight of BYK-UV 3500 were each added to 100 parts by weight of the coating composition, and stirred for 10 min. to prepare a photosetting coating composition.

### [Example 4-b] Curing of Photosetting Coating Composition

The coating composition prepared in Example 4-a was applied to SKC-SG00L 250 um film which was an SKC Company PET film, and Mayer coating was performed with No.30-50 rod which was divided into five units. Thereafter, the solvent was eliminated at the temperature of 80 °C for 10 min, and the product was UV-irradiated under 100 mW/cm² lamp using a UV machine for 10 sec. to give an outcome.

### [Example 4-c] Preparation of Thermosetting Resin Composition

50 G of the silsesquioxane complex polymer represented by the above chemical formula 3-1 was dissolved at 50 wt% in methylethylketone to prepare a coating composition of 100 g. Thereafter, 3 parts by weight of 1,3-diaminopropane, and 1 part by weight of BYK-357 and BYK-348, respectively were added to 100 part by weight of the prepared coating composition, and stirred for 10 min. to prepare a thermosetting coating composition.

### [Example 4-d] Curing of Thermosetting Coating Composition

The coating composition prepared in Example 4-c was applied to SKC-SG00L 250 um film which was an SKC Company PET film, and Mayer coating was performed with No.30-50 rod which was divided into five units. After the coating, it was cured in a dry oven of 80 °C for 10 min. to give an outcome.

### [Example 4-e] Self-curing of Chemical Formulae 1, 2 and 3 Obtained through Examples

The outcomes obtained through Examples 1, 2 and 3 were cured via heat without any additional composition. Mayer coating was performed at SKC-SG00L 250 um film which was an SKC Company PET film, with No.30-50 rod which was divided into five units, and after 2-hour curing in a dry oven of 100 °C, outcomes were obtained.

### [Experiment 1]

A weight average molecular weight and molecular weight distribution of the silsesquioxane resins prepared through Example 1-g were measured using JASCO PU-2080 plus SEC system equipped with RI-2031 plus refractive index detector and UV-2075 plus UV detector (254 detection wavelength). THF was used with the flow rate of 1 at 40 °C, and samples were separated via 4 columns (Shodex-GPC KF-802, KF-803, KF-804 and KF-805). As a result, it was confirmed that the obtained silsesquioxane had the weight average molecular weight of 24,000 by SEC analysis and the molecular weight distribution of 2.7.

### [Experiment 2]

IR was measured using ATR mode of Perkin-Elmer FT-IR system Spectrum-GX. As a result of FT-IR analysis, a wide bi-modal (successive double shapes) absorption peak from the structure taken at a small amount in Examples 1-b and 1-d processes appeared at 950 to 1200 cm⁻¹, which was derived from the stretching vibration of siloxane bonds at vertical (-Si-O-Si-R) and horizontal (-Si-O-Si-) directions among the silsesquioxane chains. Thereafter, as a result of the analysis of the samples of the structures obtained in 1-c and 1-e, it was confirmed from the fact that peaks appearing at 1200 and 1150 cm⁻¹, respectively showed more growth, that the cage type structure was replaced. In conjunction with the GPC analysis results analyzed in Experiment 1, it was confirmed from the fact that the cage type of which the actual molecular weight is at low level (generally 1,000-5,000 or so) was not observed alone in spite of the growth of the cage type characteristic peak, that the expected structures were incorporated into the chains. Further, such changes were observed in the final outcome without change.

### [Experiment 3]

The thermal stability of the structures prepared through Example 4 was examined using a TGA (thermal gravimetric analyzer), and in particular, the complex polymer obtained in 1-g was measured. The measurement was carried out through the TGA at 10 °C/min scan speed of 50-800 °C under nitrogen. As a result of the measurement, it was confirmed that by the degradation amount of Si-OH and Si-OR which were degraded between 100-200 °C was remarkably reduced by replacing a basket type structure at the terminal.

### [Experiment 4]

In order to measure the flexibility characteristics of the organic film coating cured product obtained through Example 4, mandrel test was carried out. The test was performed based on ASTM D522. Minimum values at which cracks did not occur at the side and surface were recorded from diameters 50 mm to 3 mm. As a result, since no cracks were observed at the coated surface even within 3 mm, it suggested that the complex polymer of the present invention could provide strong physical properties and flexibility characteristics at the same time.

### [Experiment 5]

The coating compositions were coated using the polymer resins listed in the above Tables 7 to 9 onto PC (Glastic polycarbonate product of i-components company), PET of SKC company, and PMMA (OAS-800 product of COPAN company) transparent substrates in accordance with the same method as the method described in Example 4, and cured to measure surface characteristics. The following experiment results were obtained using the polymer resins prepared in Example 3, and the coating compositions using the polymer resins listed in Tables 7 to 9 showed equivalent results with the polymer resin of Example 3 although they were not shown in the following Table.
- Surface hardness measurement: The coating films were scratched by moving a pencil 3 mm horizontally at the speed of 0.5 mm/sec. at 45 degree angle to the coated surface with 1kgf load which is more harsh condition than 500 g load which is generally used in the pencil hardness test (JIS 5600-5-4), and they were evaluated with scratch marks. If scratch marks of twice or more out of 5 experiments were not found, a pencil of higher hardness was selected, and if scratch marks were twice or more, the pencil was selected and a pencil hardness of one lower level than the hardness of the pencil was determined as the pencil hardness of the given coating film. Evaluation results showed that 9H hardness of a glass level was all observed at the coating thickness of 10 um or above regardless of the type of the substrates.
- Scratch test measurement: 400 times evaluation with steel wool #0000 of 1 kgf. The samples were rubbed by steel wool for 400 times, which is more harsh condition than the abrasion test by steel wool (JIS K5600-5-9) where a sample is rubbed back and forth 15 times by steel wool of #0000 which is wound up the tip of a sledgehammer of about 1 kg weight to measure a haze value, and the haze was measured and visually inspected with a microscopy. The coatings having the coating thickness of 5 um or above had all excellent resistance against scratches occurring at the surface.
- Adhesive strength evaluation (JIS K5600-5-6): The coating film was scratched with a cutter blade at 1-5 mm intervals, a cellophane tape was attached thereonto and then the attached tape was pulled off. In this procedure, the number of coming off was used to determine adhesion. The adhesion was evaluated by the number of pieces that came off out of the 100 pieces formed by a cutter blade, and the results are shown in Table 10 below. They are designated as the number of pieces which did not come off out of 100 pieces "(the number of not coming off/100)," and for example, if 100 pieces did not come off, it was designated as "(100/100)."

- Reliability evaluation: Bending properties were evaluated after 240-hour storage in a 85%, 85°C reliability chamber. The bending evaluation standard is within ±0.1 mm before reliability evaluation and within ±0.3 mm after reliability evaluation, and the bending property evaluation results after reliability storage were superior in all the substrates of PET, PC and PMMA.

**Table 10**

| Evaluation Item | | PET-0.2 | | PC | | PMMA | |
|---|---|---|---|---|---|---|---|
| | | Before coating | After coating | Before coating | After coating | Before coating | After coating |
| Coating thickness | | - | 10 *µ*m | - | 10 *µ*m | - | 10 *µ*m |
| Surface hardness (1kg*_{f}*) | | 2B | 9H(5/5) | 6B or less | 9H(5/5) | 2H | 9H(5/5) |
| Adhesive strength | | - | Pass (100/100) | - | Pass (100/100) | - | Pass (100/100) |
| Transmission (%) | UV-vis-400nm | 91.2 | 91.9 | 89.2 | 89.0 | 90.4 | 90.1 |
| | UV-vis-450nm | 91.5 | 93.0 | 90.0 | 90.1 | 91.5 | 91.1 |
| | UV-vis-500nm | 92.4 | 93.4 | 91.4 | 91.5 | 91.9 | 91.5 |
| YI (ASTMD1925) | | -0.38 | -0.11 | -0.15 | 0.04 | 0.14 | 0.22 |
| Scratch test (Steel wool, 1kg*_{f}* load, 400 times) | | Fail | Pass | Fail | Pass | Fail | Pass |
| Haze (%) | | 0.15 | 0.14 | 0.15 | 0.11 | 0.05 | 0.04 |

As shown in Table 10 above, the coating compositions of the present invention showed very excellent surface hardness and optical characteristics and at the same time, they were excellent in other properties.

The silsesquioxane complex polymer in accordance with the present invention has easy processability of the silsesquioxane ladder type and complex chain and excellent physical properties of the cage type silsesquioxane at the same time, so that when prepared into a coating solution, it can give excellent physical properties, optical properties, heat resistance properties, etc. to various materials through a simple curing process.

## Claims

1. A silsesquioxane complex polymer represented by any one of the following chemical formulae 1 to 3: 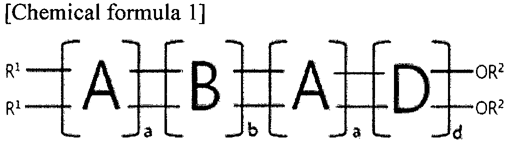 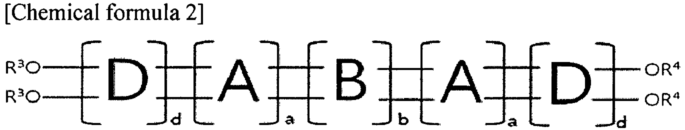 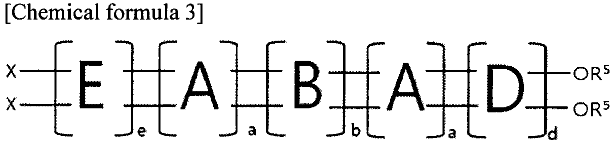 wherein, A is 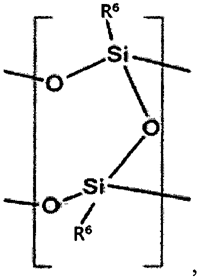 B is 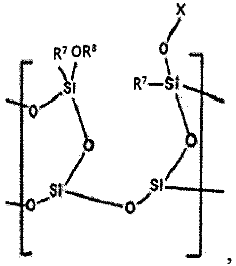 D is 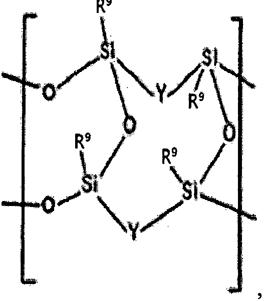 E is 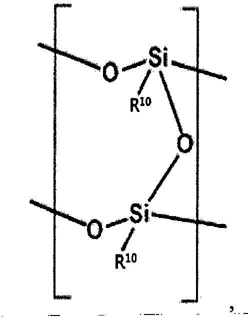
Y is each independently O, NR¹¹ or [(SiO_{3/2}R)₄₊₂ₙO], with the proviso that at least one is
X is each independently R¹² or [(SiO_{3/2}R)₄₊₂ₙR], with the proviso that at least one is [(SiO_{3/2}R)₄₊₂ₙR],
R, R¹, R², R³, R⁴, R⁵, R⁶, R⁷, R⁸, R⁹, R¹⁰, R¹¹, and R¹² are each independently hydrogen; deuterium; halogen; amine group; epoxy group; cyclohexylepoxy group; (meth)acryl group; thiol group; isocyanate group; nitrile group; nitro group; phenyl group; or alkyl group of C₁∼C₄₀; alkenyl group of C₂∼C₄₀; alkoxy group of C₁∼C₄₀; cycloalkyl group of C₃∼C₄₀; heterocycloalkyl group of C₃∼C₄₀; aryl group of C₆∼C₄₀; heteroaryl group of C₃∼C₄₀; aralkyl group of C₃∼C₄₀; aryloxy group of C₃∼C₄₀; or arylthiol group of C₃∼C₄₀ substituted or unsubstituted by deuterium, halogen, amine group, epoxy group, (meth)acryl group, thiol group, isocyanate group, nitrile group, nitro group, or phenyl group,
a and d are each independently an integer of 1 to 100,000,
b is an integer of 1 to 500,
e is 1 to 2, and
n is an integer of 1 to 20.

2. The silsesquioxane complex polymer of claim 1, wherein R comprises alkyl group of C₁∼C₄₀ or alkenyl group of C₂∼C₄₀ substituted or unsubstituted by deuterium, halogen, amine group, (meth)acryl group, thiol group, isocyanate group, nitrile group, nitro group, phenyl group or cyclohexyl epoxy group, amine group, epoxy group, cyclohexyl epoxy group, (meth)acryl group, thiol group, phenyl group, or isocyanate group.

3. The silsesquioxane complex polymer of claim 1, wherein a is 3 to 1000, b is 1 to 500, and d is 1 to 500.

4. The silsesquioxane complex polymer of claim 1, wherein d is each independently 2 to 100.

5. The silsesquioxane complex polymer of claim 1, wherein the average of the value n is 4 to 5.

6. The silsesquioxane complex polymer of claim 1, wherein the weight average molecular weight of the linear silsesquioxane complex polymer of chemical formula 1 is 1,000 to 1,000,000,
wherein the weight average molecular weight is measured using SEC system at 254 detection wavelength, as disclosed in example 1.

7. A method for preparing silsesquioxane complex polymer represented by the chemical formula 1, comprising a step 1 of mixing a basic catalyst and an organic solvent in a reactor and then adding an organic silane compound to prepare the following chemical formula 4 of two types of which the condensation rate is controlled; a step 2 of adding an acidic catalyst to the reactor to adjust the reaction solution to acidic state in order to incorporate [B]b structure and [D]d(OR²)₂ structure into the chemical formula 4 obtained from the above step 1 and then adding an organic silane compound and stirring them; a step 3 of adding a basic catalyst to the reactor after each reaction of the above step 2 to convert the reaction solution into its basic state and performing condensation reaction; and a step 4 of condensing two or more substances obtained through the above step 3 under basic condition to connect them: 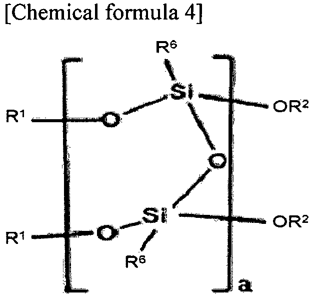 wherein, R, R¹, R², R⁶, B, D, X, Y, a, b, and d are as defined in the chemical formulae 1 to 3.

8. A method for preparing silsesquioxane complex polymer represented by the chemical formula 2, comprising a step 1 of mixing a basic catalyst and an organic solvent in a reactor and then adding an organic silane compound to prepare the following chemical formula 4 of two types of which the condensation rate is controlled; a step 2 of adding an acidic catalyst to the reactor to adjust the reaction solution to acidic state in order to incorporate [B]b structure and [D]d(OR⁴)₂ structure to the chemical formula 4 obtained from the above step 1 and then adding an organic silane compound and stirring them; a step 3 of adding a basic catalyst to the reactor after each reaction of the above step 2 to convert the reaction solution into its basic state and performing condensation reaction; a step 4 of condensing two or more substances obtained through the above step 3 under basic condition to connect them; a step 5 of adding an acidic catalyst to the reactor to adjust the reaction solution to acidic state in order to incorporate [D]d(OR³)₂ structure after the above step 4 and then adding an organic silane compound and stirring them; and a step 6 of adding a basic catalyst to the reactor after the reaction of the above step 5 to convert the reaction solution into its basic state and performing condensation reaction: 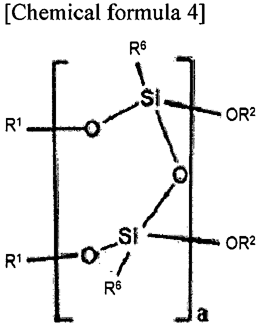 wherein, R, R¹, R², R³, R⁴, R⁶, B, D, X, Y, a, b, and d are as defined in the chemical formulae 1 to 3.

9. A method for preparing silsesquioxane complex polymer represented by the chemical formula 3, comprising a step 1 of mixing a basic catalyst and an organic solvent in a reactor and then adding an organic silane compound to prepare the following chemical formula 4 of two types of which the condensation rate is controlled; a step 2 of adding an acidic catalyst to the reactor to adjust the reaction solution to acidic state in order to incorporate [B]b structure into the chemical formula 4 obtained from the above step 1 and then adding an organic silane compound and stirring them; a step 3 of adding a basic catalyst to the reactor after each reaction of the above step 2 to convert the reaction solution into its basic state and performing condensation reaction; a step 4 of condensing two or more substances obtained through the above step 3 under basic condition to connect them; a step 5 of adding an acidic catalyst to the reactor to adjust the reaction solution to acidic state in order to incorporate [D]d(OR⁵)₂ structure after the above step 4 and then adding an organic silane compound and stirring them; a step 6 of adding a basic catalyst to the reactor after the reaction of the above step 5 to convert the reaction solution into its basic state and performing condensation reaction; and a step of 7 of adding an acidic catalyst to the reactor to convert the reaction solution into acidic atmosphere in order to incorporate [E]eX₂ structure at the end of the complex polymer after the above step 6 and then mixing an organic silane compound and stirring them: 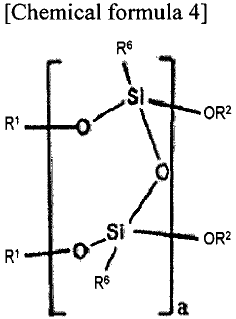 wherein, R, R¹, R², R⁵, R⁶, B, D, E, X, Y, a, b, d and e are as defined in the chemical formulae 1 to 3.

10. The method for preparing the silsesquioxane complex polymer of any one of claims 7 to 9, wherein the mixture catalyst comprises a metal type basic catalyst and an amine type basic catalyst.

11. The method for preparing the silsesquioxane complex polymer of claim 10, wherein the ratio of the amine type basic catalyst and the metal type basic catalyst is 10 to 90: 10 to 90 parts by weight.

12. A coating composition comprising the silsesquioxane complex polymer according to claim 1.

13. The coating composition of claim 12, wherein the coating composition is a solvent-free type.

14. The coating composition of claim 12, wherein it comprises the silsesquioxane complex polymer according to claim 1; an initiator; and an organic solvent.

15. The coating composition of claim 14, wherein the silsesquioxane complex polymer is 5 to 90 parts by weight with regard to 100 parts by weight of the coating composition.

16. The coating composition of claim 14, wherein the coating composition further comprises a curing agent, a plasticizer, or a sunscreen.

## Patentansprüche

1. Silsesquioxankomplexpolymer dargestellt durch eine der folgenden chemischen Formeln 1 bis 3: 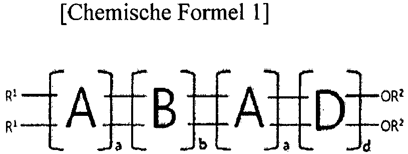 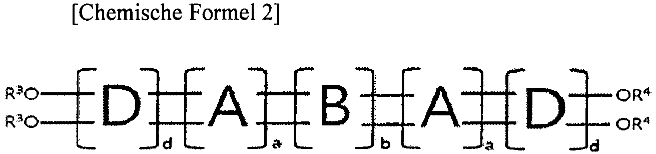 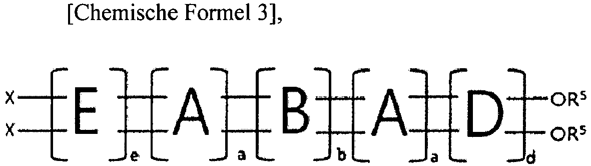 wobei A 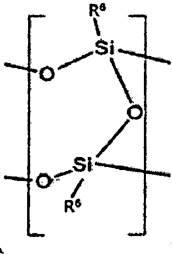 ist, B 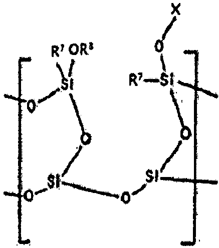 ist, D 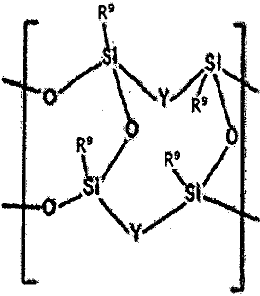 ist, E 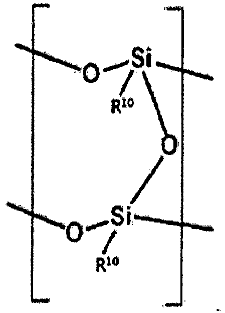 ist,
Y jeweils unabhängig O ist, NR¹¹ oder [(SiO_{3/2}R)₄₊₂ₙO] ist, mit der Bedingung, dass mindestens eines [(SiO_{3/2}R)₄₊₂ₙO] ist,
X jeweils unabhängig R¹² oder [(SiO3/₂R)₄₊₂ₙR] ist, mit der Bedingung dass mindestens eines [(SiO_{3/2}R)₄₊₂,R] ist,
R, R¹, R², R³, R⁴, R⁵, R⁶, R⁷, R⁸, R⁹, R¹⁰, R¹¹ und R¹² jeweils unabhängig Wasserstoff; Deuterium; Halogen; eine Amingruppe; eine Epoxygruppe; eine Cyclohexylepoxygruppe; eine (Meth)Acrylgruppe; eine Thiolgruppe; eine Isocyanatgruppe; eine Nitrilgruppe; eine Nitrogruppe; eine Phenylgruppe; oder eine Alkylgruppe von C₁∼C₄₀; eine Alkenylgruppe von C₂∼C₄₀; eine Alkoxygruppe von C₁∼C₄₀; eine Cycloalkylgruppe von C₃∼C₄₀; eine Heterocycloalkylgruppe von C₃∼C₄₀; eine Arylgruppe von C₆∼C₄₀; eine Heteroarylgruppe von C₃∼C₄₀; eine Aralkylgruppe von C₃∼C₄₀; eine Aryloxygruppe von C₃∼C₄₀; oder eine Arylthiolgruppe von C₃∼C₄₀, ersetzt oder nicht ersetzt durch Deuterium, Halogen, eine Aminogruppe, eine Epoxygruppe, eine (Meth)Acrylgruppe, eine Thiolgruppe, eine Isocyanatgruppe, eine Nitrilgruppe, eine Nitrogruppe, oder eine Phenylgruppe, sind
und a und d jeweils unabhängig eine Ganzzahl von 1 bis 100.000 sind,
b eine Ganzzahl von 1 bis 500 ist,
e 1 bis 2 ist, und
n eine Ganzzahl von 1 bis 20 ist.

2. Silsesquioxankomplexpolymer nach Anspruch 1, wobei R eine Alkylgrupp von C₁∼C₄₀ umfasst oder eine Alkenylgruppe von C₂∼C₄₀, ersetzt oder nicht ersetzt durch Deuterium, Halogen, eine Amingruppe, eine (Meth)Acrylgruppe, eine Thiolgruppe, eine Isocyanatgruppe, eine Nitrilgruppe, eine Nitrogruppe, eine Phenylgruppe oder Cyclohexylepoxygruppe, eine Amingruppe, eine Epoxygruppe, eine Cyclohexylepoxygruppe, eine (Meth)Acrylgruppe, eine Thiolgruppe, eine Phenylgruppe oder eine Isocyanatgruppe.

3. Silsesquioxankomplexpolymer nach Anspruch 1, wobei a 3 bis 1000 ist, b 1 bis 500 ist und d 1 bis 500 ist.

4. Silsesquioxankomplexpolymer nach Anspruch 1, wobei d jeweils unabhängig 2 bis 100 ist.

5. Silsesquioxankomplexpolymer nach Anspruch 1, wobei der Durchschnitt des Wertes n 4 bis 5 ist.

6. Silsesquioxankomplexpolymer nach Anspruch 1, wobei das Durchschnittsgewicht des Molekulargewichts des linearen Silsesquioxankomplexpolymers der chemischen Formel 1 1.000 bis 1.000.000 ist,
wobei das Durchschnittsgewicht des Molekulargewichts unter Verwendung eines SEC Systems bei einer 254 Detektionswellenlänge gemessen wird, wie in Beispiel 1 offenbart.

7. Verfahren zur Herstellung des Silsesquioxankomplexpolymers, dargestellt durch die chemische Formel 1, umfassend einen Schritt 1, bei dem ein basischer Katalysator und ein organisches Lösungsmittel in einem Reaktor gemischt werden und dann eine organische Silanverbindung hinzugefügt wird, um die folgende chemische Formel 4 von zwei Typen herzustellen, deren Kondensationsrate kontrolliert wird; einen Schritt 2, bei dem ein saurer Katalysator dem Reaktor hinzugefügt wird, um die Reaktionslösung zu einem sauren Zustand anzupassen, um eine [B]b-Struktur und [D]d(OR²)₂-Struktur in die chemische Formel 4 zu integrieren, die durch den oben genannten Schritt 1 erhalten wird, und dann eine organische Silanverbindung hinzugefügt wird und diese verrührt werden; einen Schritt 3, bei dem ein basischer Katalysator dem Reaktor nach jeder Reaktion des oben genannten Schritts 2 hinzugefügt wird, um die Reaktionslösung in ihren basischen Zustand umzuwandeln und die Kondensationsreaktion durchzuführen; und einen Schritt 4, bei dem zwei oder mehr Substanzen, die durch den oben genannten Schritt 3 erhalten wurden, unter einer basischen Bedingung kondensiert werden, um sie zu verbinden: 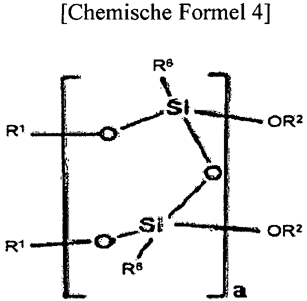 wobei R, R¹, R², R⁶, B, D, X, Y, a, b und d der Definition in den chemischen Formeln 1 bis 3 entsprechen.

8. Verfahren zur Herstellung des Silsesquioxankomplexpolymers, dargestellt durch die chemische Formel 2, umfassend einen Schritt 1, bei dem ein basischer Katalysator und ein organisches Lösungsmittel in einem Reaktor gemischt werden und dann eine organische Silanverbindung hinzugefügt wird, um die folgende chemische Formel 4 von zwei Typen herzustellen, deren Kondensationsrate kontrolliert wird; einen Schritt 2, bei dem ein saurer Katalysator dem Reaktor hinzugefügt wird, um die Reaktionslösung zu einem sauren Zustand anzupassen, um eine [B]b-Struktur und [D]d(OR⁴)₂-Struktur in die chemischen Formel 4 zu integrieren, die durch den oben genannten Schritt 1 erhalten wird, und dann eine organische Silanverbindung hinzugefügt wird und diese verrührt werden; einen Schritt 3, bei dem ein basischer Katalysator dem Reaktor nach jeder Reaktion des oben genannten Schritts 2 hinzugefügt wird, um die Reaktionslösung in ihren basischen Zustand umzuwandeln und die Kondensationsreaktion durchzuführen; einen Schritt 4, bei dem zwei oder mehr Substanzen, die durch den oben genannten Schritt 3 erhalten wurden, unter einer basischen Bedingung kondensiert werden, um sie zu verbinden; einen Schritt 5, bei dem ein saurer Katalysator dem Reaktor hinzugefügt wird, um die Reaktionslösung zu einem sauren Zustand anzupassen, um die [D]d(OR³)₂-Struktur nach dem oben genannten Schritt 4 zu integrieren, und dann eine organische Silanverbindung hinzugefügt wird und diese verrührt werden; und einen Schritt 6, bei dem ein basischer Katalysator dem Reaktor nach dem oben genannten Schritt 5 beigefügt wird, um die Reaktionslösung in ihren basischen Zustand umzuwandeln und eine Kondensationsreaktion durchzuführen: 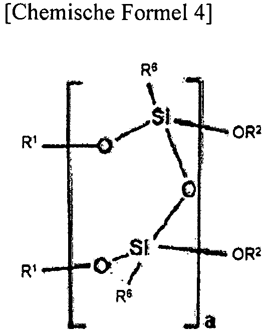 wobei R, R¹, R², R³, R⁴, R⁶, B, D, X, Y, a, b und d der Definition in den chemischen Formeln 1 bis 3 entsprechen.

9. Verfahren zur Herstellung des Silsesquioxankomplexpolymers dargestellt durch die chemische Formel 3, umfassend einen Schritt 1, bei dem ein basischer Katalysator und ein organisches Lösungsmittel in einem Reaktor gemischt werden und dann eine organische Silanverbindung hinzugefügt wird, um die folgende chemische Formel 4 von zwei Typen herzustellen, deren Kondensationsrate kontrolliert wird; einen Schritt 2, bei dem ein saurer Katalysator dem Reaktor hinzugefügt wird, um die Reaktionslösung zu einem sauren Zustand anzupassen, um eine [B]b-Struktur in die chemische Formel 4 zu integrieren, die durch den oben genannten Schritt 1 erhalten wird, und dann eine organische Silanverbindung hinzugefügt wird und diese verrührt werden; einen Schritt 3, bei dem ein basischer Katalysator dem Reaktor nach jeder Reaktion des oben genannten Schritts 2 hinzugefügt wird, um die Reaktionslösung in ihren basischen Zustand umzuwandeln und die Kondensationsreaktion durchzuführen; einen Schritt 4, bei dem zwei oder mehr Substanzen, die durch den oben genannten Schritt 3 erhalten wurden, unter einer basischen Bedingung kondensiert werden, um sie zu verbinden; einen Schritt 5, bei dem ein saurer Katalysator dem Reaktor beigefügt wird, um die Reaktionslösung in einen sauren Zustand anzupassen, um die [D]d(OR⁵)₂-Struktur nach dem oben genannten Schritt 4 zu integrieren, und dann eine organische Silanverbindung hinzuzufügen und sie zu verrühren; einen Schritt 6, bei dem ein basischer Katalysator dem Reaktor nach dem oben genannten Schritt 5 beigefügt wird, um die Reaktionslösung in ihren basischen Zustand umzuwandeln und eine Kondensationsreaktion durchzuführen; und einen Schritt 7, bei dem ein saurer Katalysator dem Reaktor hinzugefügt wird, um die Reaktionslösung in eine saure Atmosphäre umzuwandeln, um eine [E]eX₂-Struktur am Ende des komplexen Polymers nach dem oben genannten Schritt 6 zu integrieren, und dann eine organische Silanverbindung hinzuzufügen und sie zu verrühren: 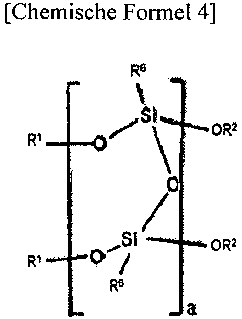 wobei R, R¹, R², R⁵, R⁶, B, D, E, X, Y, a, b, d und e der Definition in den chemischen Formeln 1 bis 3 entsprechen.

10. Verfahren zur Herstellung des Silsesquioxankomplexpolymers nach einem der Ansprüche 7 bis 9, wobei der Mischkatalysator einen basischen Katalysator vom Metalltyp und einen basischen Katalysator vom Amintyp umfasst.

11. Verfahren zur Herstellung des Silsesquioxankomplexpolymers nach Anspruch 10, wobei das Verhältnis des basischen Katalysators vom Amintyp und des basischen Katalysators vom Metalltyp 10 bis 90 : 10 bis 90 Gewichtsteile beträgt.

12. Beschichtungszusammensetzung umfassend das Silsesquioxankomplexpolymer nach Anspruch 1.

13. Beschichtungszusammensetzung nach Anspruch 12, wobei die Beschichtungszusammensetzung ein lösungsmittelfreier Typ ist.

14. Beschichtungszusammensetzung nach Anspruch 12, wobei diese das Silsesquioxankomplexpolymer nach Anspruch 1 umfasst; einen Initiator; und ein organisches Lösungsmittel.

15. Beschichtungszusammensetzung nach Anspruch 14, wobei das Silsesquioxankomplexpolymer 5 bis 90 Gewichtsteile bezogen auf 100 Gewichtsteile der Beschichtungszusammensetzung beträgt.

16. Beschichtungszusammensetzung nach Anspruch 14, wobei die Beschichtungszusammensetzung des Weiteren ein Härtemittel, einen Weichmacher oder ein Lichtschutzmittel umfasst.

## Revendications

1. Polymère complexe de silsesquioxane représenté par l'une quelconque des formules chimiques 1 à 3 suivantes : 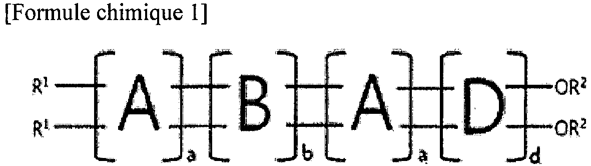 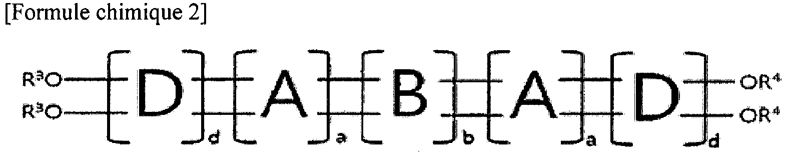 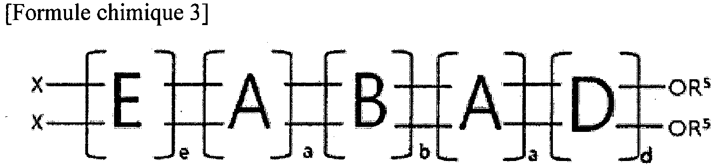 où, A représente 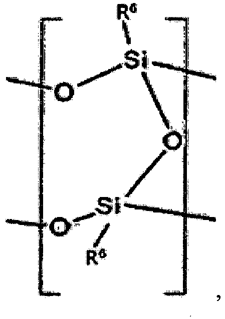 B représente 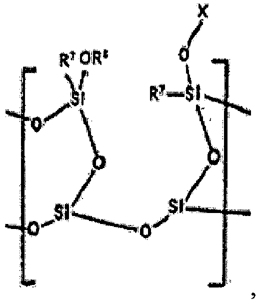 D représente 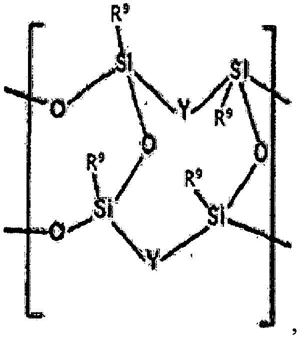 E représente 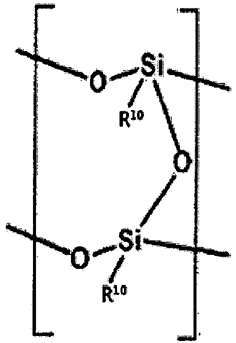 chaque Y représente indépendamment un atome O, un groupement NR¹¹ ou un groupement [(SiO_{3/2}R)₄₊₂ₙO], avec comme condition qu'au moins un de ces constituants soit le groupement [(SiO_{3/2}R)₄₊₂ₙO],
chaque X représente indépendamment un groupement R¹² ou un groupement [(SiO_{3/2}R)₄₊₂ₙR], avec comme condition qu'au moins un de ces constituants soit le groupement [(SiO_{3/2}R)₄₊₂ₙR],
R, R¹, R², R³, R⁴, R⁵, R⁶, R⁷, R⁸, R⁹, R¹⁰, R¹¹, et R¹² représentent chacun indépendamment un atome d'hydrogène ; un atome de deutérium ; un atome d'halogène ; un groupement aminé ; un groupement époxy ; un groupement cyclohexyl époxy ; un groupement (méth)acrylique ; un groupement thiol ; un groupement isocyanate ; un groupement nitrile ; un groupement nitro ; un groupement phényle ; ou un groupement alkyle en C₁ à C₄₀; un groupement alcényle en C₂ à C₄₀ ; un groupement alcoxy en C₁ à C₄₀; un groupement cycloalkyle en C₃ à C₄₀ ; un groupement hétérocycloalkyle en C₃ à C₄₀ ; un groupement aryle en C₆ à C₄₀ ; un groupement hétéroaryle en C₃ à C₄₀ ; un groupement aralkyle en C₃ à C₄₀ ; un groupement aryloxy en C₃ à C₄₀ ; ou un groupement arylthiol en C₃ à C₄₀ substitué ou non substitué par un atome de deutérium, un atome d'halogène, un groupement amine, un groupement époxy, un groupement (méth)acrylique, un groupement thiol, un groupement isocyanate, un groupement nitrile, un groupement nitro, ou un groupement phényle,
a et d représentent chacun indépendamment un nombre entier allant de 1 à 100 000,
b représente un nombre entier allant de 1 à 500,
e prend une valeur entre 1 et 2, et
n représente un nombre entier allant de 1 à 20.

2. Polymère complexe de silsesquioxane selon la revendication 1, dans lequel R comprend un groupement alkyle en C₁ à C₄₀ ou un groupement alcényle en C₂ à C₄₀ substitué ou non substitué par un atome de deutérium, un atome d'halogène, un groupement amine, un groupement (méth)acrylique, un groupement thiol, un groupement isocyanate, un groupement nitrile, un groupement nitro, un groupement phényle ou un groupement cyclohéxyl époxy, un groupement amine, un groupement époxy, un groupement cyclohéxyl époxy, un groupement (méth)acrylique, un groupement thiol, un groupement phényle, ou un groupement isocyanate.

3. Polymère complexe de silsesquioxane selon la revendication 1, dans lequel a prend une valeur entre 3 et 1 000, b prend une valeur entre 1 et 500, et d prend une valeur entre 1 et 500.

4. Polymère complexe de silsesquioxane selon la revendication 1, dans lequel chaque d prend indépendamment une valeur entre 2 et 100.

5. Polymère complexe de silsesquioxane selon la revendication 1, dans lequel la moyenne des valeurs de n se situe entre 4 et 5.

6. Polymère complexe de silsesquioxane selon la revendication 1, dans lequel la masse moléculaire moyenne en poids du polymère complexe linéaire de silsesquioxane selon la formule chimique 1 se situe entre 1 000 et 1 000 000,
dans lequel la masse moléculaire moyenne en poids est mesurée en utilisant un système de chromatographie d'exclusion stérique SEC à une longueur d'onde de détection de 254, comme indiqué dans l'exemple 1.

7. Procédé destiné à la préparation d'un polymère complexe de silsesquioxane représenté par la formule chimique 1, comprenant une étape 1 de mélange d'un catalyseur basique et d'un solvant organique dans un réacteur et ensuite l'addition d'un composé de silane organique pour préparer la formule chimique 4 suivante des deux espèces dont le taux de condensation est contrôlé ; une étape 2 d'addition d'un catalyseur acide dans le réacteur pour ajuster la solution réactionnelle à l'état acide afin d'incorporer la structure [B]b et la structure [D]d(OR²)₂ dans la formule chimique 4 obtenue à partir de l'étape 1 ci-dessus et pour ensuite ajouter un composé de silane organique et les agiter ; une étape 3 d'addition d'un catalyseur basique dans le réacteur après chaque réaction de l'étape 2 ci-dessus pour amener la solution réactionnelle à l'état basique et effectuer la réaction de condensation ; et une étape 4 de condensation de deux ou de plusieurs produits obtenus par le biais de l'étape 3 ci-dessus dans des conditions basiques pour les assembler : 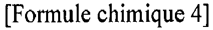 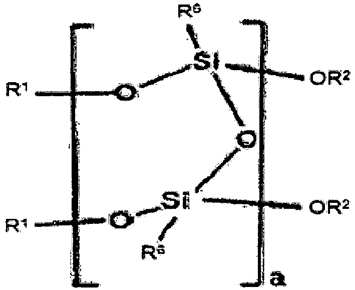 où R, R¹, R², R⁶, B, D, X, Y, a, b et d sont identiques à ceux définis dans les formules chimiques 1 à 3.

8. Procédé destiné à la préparation d'un polymère complexe de silsesquioxane représenté par la formule chimique 2, comprenant une étape 1 de mélange d'un catalyseur basique et d'un solvant organique dans un réacteur et ensuite l'addition d'un composé de silane organique pour préparer la formule chimique 4 suivante des deux espèces dont le taux de condensation est contrôlé ; une étape 2 d'addition d'un catalyseur acide dans le réacteur pour ajuster la solution réactionnelle à l'état acide afin d'incorporer la structure [B]b et la structure [D]d(OR⁴)₂ dans la formule chimique 4 obtenue à partir de l'étape 1 ci-dessus et pour ensuite ajouter un composé de silane organique et les agiter ; une étape 3 d'addition d'un catalyseur basique dans le réacteur après chaque réaction de l'étape 2 ci-dessus pour amener la solution réactionnelle à l'état basique et effectuer la réaction de condensation ; une étape 4 de condensation de deux ou de plusieurs produits obtenus par le biais de l'étape 3 ci-dessus dans des conditions basiques pour les assembler ; une étape 5 d'addition d'un catalyseur acide dans le réacteur pour ajuster la solution réactionnelle à l'état acide afin d'incorporer la structure [D]d(OR³)₂ après l'étape 4 ci-dessus et pour ensuite ajouter un composé de silane organique et les agiter ; et une étape 6 d'addition d'un catalyseur basique dans le réacteur après la réaction de l'étape 5 ci-dessus pour amener la solution réactionnelle à l'état basique et effectuer la réaction de condensation : 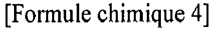 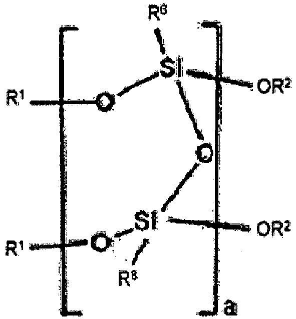 où R, R¹, R², R³, R⁴, R⁶, B, D, X, Y, a, b et d sont identiques à ceux définis dans les formules chimiques 1 à 3.

9. Procédé destiné à la préparation d'un polymère complexe de silsesquioxane représenté par la formule chimique 3, comprenant une étape 1 de mélange d'un catalyseur basique et d'un solvant organique dans un réacteur et ensuite l'addition d'un composé de silane organique pour préparer la formule chimique 4 suivante des deux espèces dont le taux de condensation est contrôlé ; une étape 2 d'addition d'un catalyseur acide dans le réacteur pour ajuster la solution réactionnelle à l'état acide afin d'incorporer la structure [B]b dans la formule chimique 4 obtenue à partir de l'étape 1 ci-dessus et pour ensuite ajouter un composé de silane organique et les agiter ; une étape 3 d'addition d'un catalyseur basique dans le réacteur après chaque réaction de l'étape 2 ci-dessus pour amener la solution réactionnelle à l'état basique et effectuer la réaction de condensation ; une étape 4 de condensation de deux ou de plusieurs produits obtenus par le biais de l'étape 3 ci-dessus dans des conditions basiques pour les assembler ; une étape 5 d'addition d'un catalyseur acide dans le réacteur pour ajuster la solution réactionnelle à l'état acide afin d'incorporer la structure [D]d(OR⁵)₂ après l'étape 4 ci-dessus et pour ensuite ajouter un composé de silane organique et les agiter ; une étape 6 d'addition d'un catalyseur basique dans le réacteur après la réaction de l'étape 5 ci-dessus pour amener la solution réactionnelle à l'état basique et effectuer la réaction de condensation ; et une étape 7 d'addition d'un catalyseur acide dans le réacteur pour amener la solution réactionnelle dans une atmosphère acide afin d'incorporer la structure [E]eX₂ à l'extrémité du polymère complexe après l'étape 6 ci-dessus et pour ensuite mélanger un composé de silane organique et les agiter : 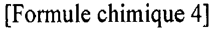 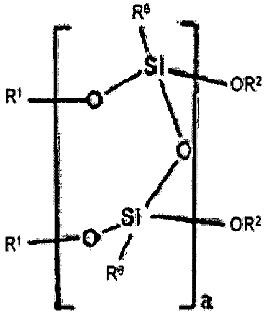 où R, R¹, R², R⁵, R⁶, B, D, E, X, Y, a, b, d et e sont identiques à ceux définis dans les formules chimiques 1 à 3.

10. Procédé destiné à la préparation d'un polymère complexe de silsesquioxane selon l'une quelconque des revendications 7 à 9, dans lequel le catalyseur de mélange comprend un catalyseur basique de type métallique et un catalyseur basique de type amine.

11. Procédé destiné à la préparation d'un polymère complexe de silsesquioxane selon la revendication 10, dans lequel le ratio entre le catalyseur basique de type amine et le catalyseur basique de type métallique est de 10 à 90 : 10 à 90 parties en poids.

12. Composition de revêtement comprenant le polymère complexe de silsesquioxane selon la revendication 1.

13. Composition de revêtement selon la revendication 12, dans laquelle la composition du revêtement est de type sans solvant.

14. Composition de revêtement selon la revendication 12, dans laquelle elle comprend le polymère complexe de silsesquioxane selon la revendication 1 ; un initiateur ; et un solvant organique.

15. Composition de revêtement selon la revendication 14, dans laquelle le polymère complexe de silsesquioxane est présent à hauteur de 5 à 90 parties en poids par rapport aux 100 parties en poids de la composition du revêtement.

16. Composition de revêtement selon la revendication 14, dans laquelle la composition du revêtement comprend en outre un agent de réticulation, un plastifiant, ou un écran solaire.
